(19) Europäisches Patentamt
European Patent Office
Office européen des brevets

(11) EP 2 765 142 A1

(12) **EUROPEAN PATENT APPLICATION**
published in accordance with Art. 153(4) EPC

(43) Date of publication:
**13.08.2014 Bulletin 2014/33**

(21) Application number: **12837696.9**

(22) Date of filing: **19.09.2012**

(51) Int Cl.:
***C08F 2/24*** *(2006.01)* ***C08F 212/08*** *(2006.01)*

(86) International application number:
**PCT/JP2012/005946**

(87) International publication number:
**WO 2013/051205 (11.04.2013 Gazette 2013/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.10.2011 JP 2011223108**
**03.08.2012 JP 2012172562**

(71) Applicant: **Dai-Ichi Kogyo Seiyaku Co., Ltd.**
**Kyoto 600-8873 (JP)**

(72) Inventors:
- **OGASAWARA, Asako**
  **Kyoto-shi**
  **Kyoto 600-8873 (JP)**
- **HASHIMOTO, Masayuki**
  **Kyoto-shi**
  **Kyoto 600-8873 (JP)**

(74) Representative: **Enomoto, Kéi**
**RGC Jenkins & Co.**
**26 Caxton Street**
**London SW1H 0RJ (GB)**

(54) **EMULSION POLYMERIZATION METHOD USING REACTIVE EMULSIFYING AGENT, AQUEOUS POLYMER DISPERSION OBTAINED BY SAME, AND POLYMER FILM**

(57) Provided is an emulsion polymerization method for carrying out emulsion polymerization of monomers using a reactive emulsifier in an aqueous medium in the presence of a polymerization initiator, the emulsion polymerization method being capable of solving problems such as an enhancement of a rate of copolymerization of the reactive emulsifier with the monomer, dissolution of a bubbling trouble, a more improvement of water resistance of a coating film, etc. The emulsion polymerization is carried out using one or two or more kinds of polymerizable unsaturated monomers X having at least one carbon-carbon double bond in a molecule, one or two or more kinds of reactive emulsifiers Y having at least one polymerizable group in a molecule, and one or two or more kinds of polyfunctional monomers Z1 having two or more polymerizable unsaturated groups in a molecule and having a molecular weight per functional group of less than 150, or one or two or more kinds of hydrophilic monomers Z2 having one polymerizable unsaturated group and a hydrophilic group in a molecule and having an average molecular weight of less than 250, with a proportion of the total use amount of the polyfunctional monomer Z1 or hydrophilic monomer Z2 to the total use amount of the reactive emulsifier Y being in the range of Z1/Y = 1/3 to 1/30 or Z2/Y = 1/1 to 1/30 in terms of a mass ratio.

EP 2 765 142 A1

## Description

Technical Field

The present invention relates to an emulsion polymerization method using a reactive emulsifier and also relates to an aqueous polymer dispersion obtained by the same and a polymer film.

Background Art

In recent years, taking the global environment and the working environment into account, a changeover from the solvent system to the aqueous system is proceeding in resin production processes, pressure-sensitive adhesives, paints, and the like. For that reason, performances required for aqueous polymer dispersions (inclusive of polymer emulsions and latexes) in each of the fields have been increasing more and more. Polymer dispersions by the emulsion polymerization method are used for the production of resins or coating materials, and examples of a role of coating films formed upon coating with a coating material include protection of a subject, fine dress, functionality impartation, and the like. More specifically, examples of the protection of a subject include corrosion resistance, stain resistance, water resistance, chemical resistance, fire resistance, pest repellency, bacterial resistance, and the like; examples of the fine dress include smoothening, gloss impartation, coloring, patterning, designing, landscape creation, and the like; and examples of the functionality impartation include impartation of each of performances such as bonding, adhesion, water repellency/oil repellency, light control, heat control, adsorption, etc.

The emulsion polymerization method is an extremely effective method as an industrial production process of a polymer dispersion; however, in view of the fact that an emulsifier (surfactant) that is an essential component exists in a free state in the system, there may be the case where a bubble trouble in each of steps such as stirring operation, transfer, addition of an auxiliary, coating, etc. is caused, resulting in causing a lowering of the production efficiency. In addition, when bubbles generated in these steps remain till the treatment step of a polymer dispersion, there may be the case where strength properties, protection properties, fine dressing properties, function properties, and the like of the coating film are adversely affected, resulting in causing a lowering of commercial value. In addition, there is also a problem of effluent load due to effluence of the surfactant from the system.

The above-described bubble trouble during the production step, water resistance of the coating film, effluent load due to effluence of the surfactant from the system, and the like in the production process of a polymer dispersion and various utilizations are essential common problems following the use of the surfactant (emulsifier) in the emulsion polymerization method, namely the production process of a polymer dispersion, and it may be said that a solution of them is extremely important. The above-described bubble problem was conventionally treated by using a defoaming agent or devising the step equipment. However, in recent years, a reactive emulsifier has been proposed to be utilized and put into practical use as an emulsifier for emulsion polymerization (PTL 1 and PTL 2, etc.).

In the case of preparing a polymer dispersion by the emulsion polymerization method using a radical polymerizable group-containing reactive emulsifier, it may be considered that in the initial stage from commencement of the polymerization, the reactive emulsifier contributes to micell formation, solubilization of a monomer, and emulsification similar to general surfactants, whereas from the middle to late stages of the polymerization, the reactive emulsifier per se is copolymerized with a monomer in the system, thereby contributing to dispersion stabilization of polymer particles. That is, the reactive emulsifier per se is copolymerized with a monomer in the system and immobilized on a polymer skeleton due to a chemical bond while functioning as an emulsifier in the emulsion polymerization step, and therefore, as compared with the case of using a conventional reactive group-free emulsifier, the reactive emulsifier greatly decreases the amount of the emulsifier (surfactant) existing in a free state in the polymer dispersion, thereby contributing to dissolution of the above-described bubble problem, enhancement of water resistance of the coating film, and decrease of the effluent load.

In consequence, by the use of a reactive emulsifier, various problems to be caused due to the conventional emulsifiers were improved. However, there was the case where such various problems could not be dissolved because a rate of reaction (rate of copolymerization with monomer) of the reactive emulsifier in the system became low depending upon the reactive emulsifier species or monomer species, or a polymerization condition, or the like, and a lot of the emulsifier in a free state remained in the system.

Specifically, a lowering of a degree of conversion of monomer, a change of molecular weight distribution (increase of degree of polydispersion), an increase of oligomer amount, and the like were caused depending upon a combination of the used monomer and reactive emulsifier, and in the actual production steps, there was the case where the bubble trouble or a lowering of various physical properties of the polymer coating film was caused. Thus, the actual various problems were not always thoroughly dissolved even by using a reactive emulsifier. In particular, in the case where it was intended to copolymerize a styrene monomer by using a reactive emulsifier not having a nonyl phenol skeleton, this tendency was remarkable. When the amount of an oligomer which was formed as a by-product increases

during the emulsion polymerization step, there was the case where it was difficult for the conventionally used defoaming agent to achieve defoaming against bubbles formed in the polymerization step and the late step. Thus, its treatment was a pending problem.

Furthermore, a polymer dispersion which is prepared by the emulsion polymerization method is usually provided for (i) formation of a coating film as a paint or a pressure-sensitive adhesive, or (ii) recovery of a solid polymer by a precipitating agent. However, these involve the following problems, respectively.

First of all, in the formation of a coating film of (i), an enhancement of water resistance is exemplified as the most important requirement item in its application. However, even if a reactive emulsifier is used, in the case where a rate of reaction (rate of copolymerization with monomer) of the reactive emulsifier per se is low, there is the case where the water resistance of the coating film is adversely affected. Specifically, in the case of brining the coating film into contact with water or putting the coating film in water, there is the case where a whitening (cloudiness) phenomenon of the coating film, a water absorption/swelling phenomenon, alowering of pressure-sensitive adhesive strength, or the like is generated.

In addition, in the recovery of a solid polymer of (ii), the recovery of a solid polymer from the dispersion or latex is achieved in the precipitation step by the salting-out method, the acid deposition method, or the like. However, at that time, there is a concern that the liberated emulsifier or the oligomer which has not been solidified in the above-described precipitation step flows out into an aqueous waste liquid at the time of water washing of the solid polymer or at the time of cleaning of the accompanying production line, thereby increasing an effluent load in an industrial wastewater treatment step. In addition, the incorporation of the liberated emulsifier or oligomer into the recovered solid polymer to be caused due to insufficient water washing may become a cause of hue deterioration at the time of heating of the polymer.

Citation List

Patent Literature

PTL 1: JP-A-63-183998
PTL 2: JP-A-8-41113

Summary of Invention

Technical Problem

In view of the above-described circumstances, the present invention has been made, and an object of it is to provide an emulsion polymerization method using a reactive emulsifier, which is able to enhance a rate of copolymerization of the reactive emulsifier with a monomer, dissolve a bubble trouble thereby, more improve water resistance of a coating film, and solve various problems such as a decrease of effluent load related to recovery of a solid polymer, etc., a bubble trouble-free aqueous polymer dispersion obtained therefrom, and a polymer film with enhanced water resistance.

More specifically, the object is to solve a problem that there may be the case where a rate of reaction of a reactive emulsifier in a system becomes low depending upon the reactive emulsifier species or monomer species, or a polymerization condition, whereby a lot of the emulsifier in a free state remains in the system, or the case where the content of an undesired by-product increases; to enhance a rate of copolymerization of the reactive emulsifier with a monomer, thereby dissolving a bubble trouble which greatly participates in its production efficiency in a production process; to decrease greatly an effluent load due to a waste liquid to be discharged from a production line; and furthermore, to suppress a whitening (cloudiness) phenomenon of a polymer coating film, a water absorption/swelling phenomenon, a lowering of pressure-sensitive adhesive strength, or the like, which is generated in the case of bringing the coating film into contact with water, or in the case of putting the coating film in water. Solution to Problem

The emulsion polymerization method of the present invention is concerned with an emulsion polymerization method for carrying out emulsion polymerization of monomers using a reactive emulsifier in an aqueous medium in the presence of a polymerization initiator, wherein in order to solve the foregoing problem, the emulsion polymerization is carried out using one or two or more kinds of polymerizable unsaturated monomers X having at least one carbon-carbon double bond in a molecule, one or two or more kinds of reactive emulsifiers Y having at least one polymerizable group represented by any one of the following chemical formulae (1) to (3) in a molecule, and one or two or more kinds of polyfunctional monomers Z1 having two or more polymerizable unsaturated groups in a molecule and having a molecular weight per functional group of less than 150, or one or two or more kinds of hydrophilic monomers Z2 having one polymerizable unsaturated group in a molecule, having a hydrophilic group selected from a hydroxyethyl group, a 2-hydroxyethoxyethyl group, a hydroxypropyl group, a 2-hydroxypropoxypropyl group, a polyoxyethylene group, a polyoxypropylene group, a glyceryl group, a polyglyceryl group, and an alkoxylated derivative of them having from 1 to 4 carbon atoms in a molecule, and having an average molecular weight of less than 250; and a proportion of the total use amount of the polyfunctional monomer Z1 or hydrophilic monomer Z2 to the total use amount of the reactive emulsifier Y is in the range of Z1/Y = 1/3 to 1/30 or Z2/Y = 1/1 to 1/30 in terms of a mass ratio.

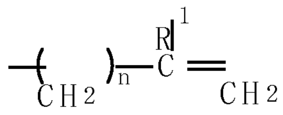 ... (1)

$-CH=CH-CH_3$ (2)

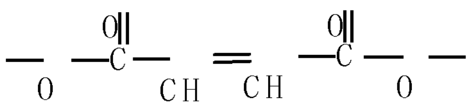 ... (3)

In the formula (1), $R^1$ represents hydrogen or a methyl group; and n represents an integer of from 1 to 5.

In the above-described emulsion polymerization method, it is preferable that the above-described polyfunctional monomer Z1 or hydrophilic monomer Z2 has at least one group represented by any one of the following chemical formulae (4) to (6) as the polymerizable unsaturated group in a molecule.

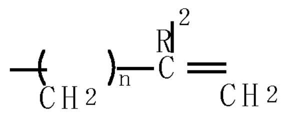 ... (4)

$-CH=CH-CH_3$ (5)

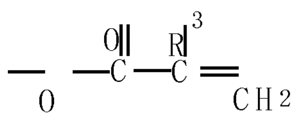 ... (6)

Each of $R^2$ in the formula (4) and $R^3$ in the formula (6) represents a hydrogen atom or a methyl group; and n in the formula (4) represents an integer of from 1 to 5.

As the above-described polyfunctional monomer Z1, one or two or more kinds of members selected from ethylene glycol diacrylate, ethylene glycol dimethacrylate, trimethylolpropane triacrylate, trimethylolpropane trimethacrylate, 1, 6-hexanediol diacrylate, 1, 3-butylene glycol dimethacrylate, triallyl cyanurate, trimethallyl cyanurate, triallyl isocyanurate, trimethallyl isocyanurate, and octaallyl sucrose can be suitably used.

In addition, one or two or more kinds of members selected from hydroxyethyl acrylate, hydroxyethyl methacrylate, 2-(2-hydroxyethoxy)ethyl acrylate, 2-(2-hydroxyethoxy)ethyl methacrylate, hydroxypropyl acrylate, hydroxypropyl methacrylate, 2-(2-hydroxypropoxy)propyl acrylate, 2-(2-hydroxypropoxy)propyl methacrylate, hydroxyethyl allyl ether, hydroxypropyl allyl ether, 2-(2-hydroxyethoxy)ethyl allyl ether, 2-(2-hydroxypropoxy)propyl allyl ether, and a methoxylated derivative of them can be suitably used as the above-described hydrophilic monomer Z2.

In the case where at least styrene is used as the above-described polymerizable unsaturated monomer X, the effects of the present invention are conspicuously obtained.

The polymer dispersion of the present invention is one obtained by the above-described emulsion polymerization method of the present invention.

In addition, the polymer film of the present invention is one prepared by drying a polymer dispersion obtained by the above-described emulsion polymerization method. Advantageous Effects of Invention

According to the present invention, the problem that there was possibly the case where in an emulsion polymerization step using a reactive emulsifier having a specified structure, incompatibility of the monomer species and/or a polymerization condition adversely affects copolymerizability of the reactive emulsifier with a monomer is solved, and in the case where a lot of the emulsifier in a free state remains in the system, or in the case where the content of an undesired by-product increases, problems to be caused due to such a matter are solved. More specifically, the following

effects are obtained.

(1) The copolymerizability of the reactive emulsifier with a variety of monomers is enhanced. In particular, in the case where it is intended to copolymerize a styrene monomer by using a reactive emulsifier not having a nonyl phenol skeleton, the copolymerizability of styrene is greatly improved.
(2) A whitening (cloudiness) phenomenon of a polymer coating film, a water absorption/swelling phenomenon, a lowering of pressure-sensitive adhesive strength, or the like, which is generated in the case of bringing the coating film into contact with water, or in the case of putting the coating film in water is suppressed without losing the desired properties, thereby greatly enhancing the water resistance of the coating film.
(3) In the emulsion polymerization process, a bubble trouble which greatly affects the production efficiency in the commercial production can be dissolved. In addition, the aqueous polymer dispersion of the present invention which is obtained by the above-described emulsion polymerization method of the present invention is one in which the bubble trouble is dissolved as described above. In addition, the polymer film of the present invention obtained by the foregoing aqueous polymer dispersion is one in which the water resistance is greatly enhanced as described above.

Description of Embodiments

With respect to the emulsion polymerization step using a reactive emulsifier of the present invention and the aqueous polymer dispersion obtained therefrom and the polymer coating film, best modes for carrying out the inventions are hereunder described. Incidentally, in this specification, it is to be construed that the polymer aqueous dispersion obtained by the emulsion polymerization method is generically named "polymer dispersion", and that this also includes generally named polymer emulsion and polymer latex as a synonym. In addition, it is to be construed that the term "polymer film" refers to both a coating film in a state of being formed on the surface of a base material and a film obtained by releasing the coating film from the base material.

(1) Polymerizable unsaturated monomer X:

The polymerizable unsaturated monomer X which is used in the present invention is not particularly limited, and for examples, listed are include acrylic acid esters such as methyl acrylate, ethyl acrylate, butyl acrylate, isobutyl acrylate, tertiary butyl acrylate, pentyl acrylate, hexyl acrylate, cyclohexyl acrylate, heptyl acrylate, octyl acrylate, 2-ethylhexyl acrylate, nonyl acrylate, decyl acrylate, undecyl acrylate, lauryl acrylate, tridecyl acrylate, stearyl acrylate, etc. In addition, the examples include methacrylic acid esters such as methyl methacrylate, ethyl methacrylate, propyl methacrylate, butyl methacrylate, isobutyl methacrylate, tertiary butyl methacrylate, pentyl methacrylate, hexyl methacrylate, cyclohexyl methacrylate, heptyl methacrylate, octyl methacrylate, 2-ethylhexyl methacrylate, nonyl methacrylate, decyl methacrylate, undecyl methacrylate, lauryl methacrylate, tridecyl methacrylate, stearyl methacrylate, glycidyl methacrylate, etc.; and besides, acrylonitrile, methacrylonitrile, acrylamide, methacrylamide, acrylic acid, methacrylic acid, and the like. In addition, the examples include aromatic monomers such as styrene, $\alpha$-methylstyrene, vinyltoluene, dimethylstyrene, tert-butylstyrene, divinylbenzene, sodium styrenesulfonate, etc.; vinyl ester-based monomers such as vinyl acetate, VeoVa (registered trademark) 9 (vinyl neononanoate, manufactured by MOMENTIVE), VeoVa (registered trademark) 10 (vinyl neodecanoate, manufactured by MOMENTIVE), etc.; halogenated olefin monomers such as vinyl chloride, vinylidene chloride, vinyl fluoride, vinylidene fluoride, trichloroethylene, tetrafluoroethylene, 2-chloropropene, 2-fluoropropene, hexafluoropropene, etc.; conjugated diolefin-based monomers such as butadiene, isoprene, chloroprene, etc.; and besides, ethylene, maleic anhydride, methyl maleate, sodium vinylsulfonate, and the like. These monomers may be used solely, or may be used in combination of two or more kinds of them. Among the foregoing, acrylic acid esters, methacrylic acid esters, styrene, conjugated diolefin-based monomers, and the like can be suitably utilized. In particular, in the case where styrene is used as one kind of the copolymerization monomer, the effects of the present invention are conspicuously revealed.

(2) Reactive emulsifier Y:

As described above, the reactive emulsifier Y which is used in the present invention has at least one polymerizable group represented by any one of the following chemical formulae (1) to (3) in a molecule. In the formula (1), $R^1$ represents hydrogen or a methyl group; and n represents an integer of from 1 to 5, and preferably 1 to 3.

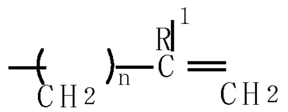 ... (1)

-CH=CH-$CH_3$ (2)

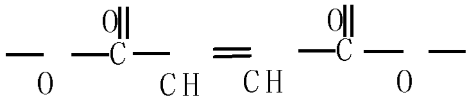 ... (3)

The polymerizable group represented by the chemical formula (1) is an allyl group (2-propenyl group), a methallyl group (2-methyl-2-propenyl group), an isopropenyl group, a 3-butenyl group, a 3-methyl-3-butenyl group, or the like. In addition, the above-described polymerizable group may be substituted on an aromatic group, and for example, an allylphenyl group, a methallylphenyl group, an isoallylphenyl group, an allylalkylphenyl group, a methallylalkylphenyl group, an isopropenylalkylphenyl group, and the like are also an example of the polymerizable group which can be suitably used. The polymerizable group represented by the chemical formula (2) is a 1-propenyl group. In addition, a 1-propenyl group may be substituted on an aromatic group, and for example, a 1-propenyl phenyl group, a 1-propenyl alkylphenyl group, and the like are also an example of the polymerizable group which can be suitably used. The polymerizable group represented by the chemical formula (3) is one derived from maleic acid or fumaric acid. Incidentally, the hydrophilic group of the above-described reactive emulsifier Y may be nonionic, or may also be either anionic or cationic. In addition, a mixture of them in an arbitrary blending ratio can be used. For examples, listed are a combination of an anionic reactive emulsifier and a nonionic reactive emulsifier and a combination of a cationic reactive emulsifier and a nonionic reactive emulsifier. The nonionic hydrophilic group is suitably a polyoxyalkylene chain, and more preferably a polyoxyethylene chain. In addition, a polyhydric alcohol is also a hydrophilic group which can be suitably used. Examples of the anionic hydrophilic group include a sulfonic acid salt, a carboxylic acid salt, a sulfuric acid ester salt, a phosphoric acid salt, a sulfosuccinic acid salt, and the like. A quaternary ammonium salt and an amine salt are suitable as the cationic hydrophilic group.

The reactive emulsifier which can be applied in the present invention is specifically exemplified below. But, it is to be construed that the reactive emulsifier is not limited to those exemplified below so long as it is satisfactory with the above-described requirements.

A sulfosuccinic acid diester salt derived from a higher alcohol and allyl glycidyl ether or methallyl glycidyl ether, as described in JP-B-49-46291;

A sulfosuccinic acid diester salt derived from a higher alcohol or a higher alcohol alkylene oxide adduct and allyl glycidyl ether or methallyl glycidyl ether, as described in JP-A-58-203960;

A nonionic reactive emulsifier obtained by introducing an alkylene oxide chain into a reaction product between an alcohol or an alkylphenol each having from 8 to 24 carbon atoms and allyl glycidyl ether or methallyl glycidyl ether, and a reactive emulsifier obtained by after introducing an alkylene oxide chain, introducing an anionic group, as described in JP-A-62-104802;

A nonionic reactive emulsifier obtained by introducing an alkylene oxide chain into a reaction product between a branched higher alcohol and allyl glycidyl ether or methallyl glycidyl ether, and a reactive emulsifier obtained by after introducing an alkylene oxide chain, introducing an anionic group, as described in JP-A-2002-301353;

A nonionic reactive emulsifier obtained by adding an alkylene oxide, an alkyl glycidyl ether, or phenyl glycidyl ether to allyl alcohol, and a reactive emulsifier obtained by further introducing an anionic group, as described in JP-T-2005-536621;

A nonionic reactive emulsifier obtained by adding an α-olefin epoxide or an alkyl glycidyl ether to 3-methyl-3-buten-1-ol and subsequently adding ethylene oxide, and a reactive emulsifier obtained by further introducing a sulfuric acid ester salt into its oxyethylene chain end, as described in JP-A-2002-80506 and JP-A-2002-97212;

A nonionic reactive emulsifier obtained by introducing an alkylene oxide chain into a reaction product between an α-olefin epoxide having from 10 to 32 carbon atoms and allyl alcohol or methallyl alcohol, as described in JP-A-63-319035;

A reactive emulsifier obtained by introducing an alkylene oxide chain into a reaction product between an α-olefin epoxide having from 10 to 32 carbon atoms and allyl alcohol or methallyl alcohol, followed by introduction of a sulfuric acid ester salt into its oxyalkylene chain end, as described in JP-A-1-99638;

A nonionic reactive emulsifier obtained by introducing an alkylene oxide chain into a reaction product between a branched olefin oxide or an internal olefin oxide and allyl alcohol or methallyl alcohol, and a reactive emulsifier obtained

by further introducing a sulfuric acid ester salt into its oxyalkylene chain end, as described in JP-A-2002-275115;

A reactive emulsifier obtained by introducing an alkylene oxide chain into a reaction product between an α-olefin epoxide having from 8 to 32 carbon atoms and allyl alcohol or methallyl alcohol, followed by introduction of a carboxylic acid salt group into its end, as described in JP-A-7-18009;

A nonionic reactive emulsifier obtained by adding an alkylene oxide to propenyl nonylphenol, as described in JP-A-4-50204;

A reactive emulsifier obtained by adding an alkylene oxide to propenyl nonylphenol and then subjecting its oxy alkylene chain end to sulfation, as described in JP-A-4-53802;

A reactive emulsifier obtained by adding an alkylene oxide to propenyl nonylphenol, followed by introduction of a carboxylic acid salt, as described in JP-A-6-248005;

A reactive emulsifier obtained by adding an alkylene oxide to propenyl nonylphenol, followed by phosphorylation, as described in JP-A-4-55401;

A reactive emulsifier obtained by allowing maleic anhydride to react with a 1,2-dihydroxyalkane or a reaction product between a 1,2-dihydroxyalkane and an alkylene oxide, followed by neutralization with an alkali, as described in JP-A-2011-6684;

A reactive emulsifier obtained by allowing maleic anhydride to react with an alkylene oxide adduct of a higher alcohol and then further adding an alkylene oxide, followed by introduction of a sulfuric acid ester salt or a phosphoric acid ester salt, and a reactive emulsifier obtained by allowing maleic anhydride to react with a 1,2-dihydroxyalkane or a reaction product between a 1, 2-dihydroxyalkane and an alkylene oxide and then further adding an alkylene oxide, followed by introduction of a sulfuric acid ester salt or a phosphoric acid ester salt, as described in JP-A-2011-16996; and

A reactive emulsifier obtained by allowing maleic anhydride to react with a higher alcohol, followed by sulfonation, as described in JP-A-58-45236.

Besides, the following allyl alcohol derivatives are also an example of the reactive emulsifier which can be used in the present invention. For examples, listed are a nonionic reactive emulsifier obtained by adding an alkylene oxide to allyl alcohol; an ionic reactive emulsifier obtained by further subjecting its end to sulfation, sulfonation, ether carboxylation, or phosphorylation, or introducing a quaternary ammonium salt group into the end; and the like. In addition, sodium 3-allyloxy-2-hydroxy-1-propanesulfonate represented by the following structural formula, which is obtained by allowing sodium 3-chloro-2-hydroxy-1-propanesulfonate obtained through a reaction between epichlorohydrin and sodium hydrogen sulfite to react with allyl alcohol in the presence of sodium hydroxide, is also a reactive emulsifier which can be used in the present invention.

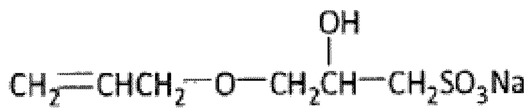

In general, the use amount of the reactive emulsifier in the emulsion polymerization method of the present invention is preferably from 0.1 to 20 % by weight, and more preferably from 0.2 to 10 % by weight relative to the weight of all of the monomers.

(3) Polyfunctional monomer Z1:

The polyfunctional monomer Z1 having two or more polymerizable unsaturated groups in a molecule, which is used in the present invention is preferably a polyfunctional monomer having a molecular weight per functional group of less than 150. In the case where the molecular weight per functional group is 150 or more, an effect for water resistance of the polymer coating film is poor, and specifically, an effect for enhancement of a rate of copolymerization of the reactive emulsifier is poor. In addition, an effect for suppression of a whitening (cloudiness) phenomenon of the coating film or suppression of a water absorption/swelling phenomenon is poor. In the case of adding a large amount of this polyfunctional monomer for the purpose of compensating that effect, as compared with the case of not adding this polyfunctional monomer, an inconvenience such that mechanical properties of the coating film are lowered, pressure-sensitive adhesive strength is lowered, or a good coating film cannot be fabricated is generated. In addition, the amount of an agglomerate increases at the time of emulsion polymerization, thereby generating inconveniences such as a lowering of a solid content of the polymer dispersion, a lowering of yield, a step delay to be caused due to clogging of a filtration filter, etc. In addition, in the case of taking out the solid polymer or at the time of cleaning the production line, problems that not only an effect for decreasing an effluent load of waste liquid to be discharged is not found, but a drainage load is deteriorated are generated.

It is preferable that the polyfunctional monomer Z1 has at least one group represented by any one of the chemical formulae (4) to (6) as the polymerizable unsaturated group in a molecule. Incidentally, each of $R^2$ in the formula

(4) and $R^3$ in the formula (6) represents hydrogen or a methyl group; and n represents an integer of from 1 to 5, and preferably from 1 to 3.

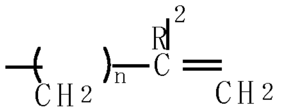 ... (4)

$-CH=CH-CH_3$ (5)

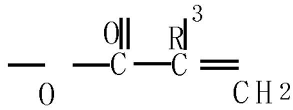 ... (6)

The polymerizable unsaturated group represented by the chemical formula (4) is an allyl group (2-propenyl group) or a methallyl group (2-methyl-2-propenyl group). Specifically, listed are triallyl isocyanurate, trimethallyl isocyanurate, triallyl cyanurate, trimethallyl cyanurate, diallylamine, triallylamine, diallyl adipate, diallyl carbonate, diallyldimethylammonium chloride, diallyl fumarate, diallyl isophthalate, diallyl malonate, diallyl oxalate, diallyl phthalate, diallylpropyl isocyanurate, diallyl sebacate, diallyl succinate, diallyl terephthalate, diallyl tatolate, diallylbenzene, dimethallylbenzene, 2,6-diallylphenol, 2,6-diallylphenol derivatives, 2,6-dimethallylphenol, 2,6-dimethallylphenol derivatives, and the like.

The polymerizable unsaturated group represented by the chemical formula (5) is a 1-propenyl group. For specific examples, di-1-propenylbenzene, di-1-propenylphenol, di-1-propenylphenol derivatives, and the like are listed.

The polymerizable unsaturated group represented by the chemical formula (6) is an acrylate group or a methacrylate group. Specifically, examples of difunctional monomers include ethylene glycol diacrylate, ethylene glycol dimethacrylate, diethylene glycol diacrylate, diethylene glycol dimethacrylate, triethylene glycol diacrylate, triethylene glycol dimethacrylate, polyethylene glycol diacrylate, polyethylene glycol dimethacrylate, propylene glycol diacrylate, propylene glycol dimethacrylate, dipropylene glycol diacrylate, dipropylene glycol dimethacrylate, tripropylene glycol diacrylate, tripropylene glycol dimethacrylate, polypropylene glycol diacrylate, polypropylene glycol dimethacrylate, 1,3-butylene glycol diacrylate, 1,3-butylene glycol dimethacrylate, 1,4-butanediol diacrylate, 1,4-butanediol dimethacrylate, 1,6-hexanediol diacrylate, 1,6-hexanediol dimethacrylate; other alkylene diol diacrylates and alkylene diol dimethacrylates; neopentyl glycol diacrylate, neopentyl glycol dimethacrylate; and the like. Besides, hydrocarbon-derived diols or diacrylates or dimethacrylates of alkylene oxide derivatives of them, and the like can be utilized. In addition, specifically, examples of trifunctional monomers include trimethylolpropane triacrylate, trimethylolpropane trimethacrylate, pentaerythritol triacrylate, pentaerythritol trimethacrylate, tris(acryloxyethyl) isocyanurate, and the like. Besides, examples of tetrafunctional or polyfunctional monomers include pentaerythritol acrylate, pentaerythritol tetramethacrylate, dipentaerythritol polyacrylate, dipentaerythritol polymethacrylate, octaallyl sucrose, and the like.

Incidentally, in the present invention, though it is preferable to use one kind selected from the above-described bifunctional and trifunctional or polyfunctional monomers, a combination of two or more kinds of them can be used so long as the problem to be solved by the present invention is not adversely affected.

In order that the effects of the present invention may be revealed especially conspicuously, triallyl cyanurate, trimethallyl cyanurate, triallyl isocyanurate, triallyl cyanurate, diallyl phthalate, diallyl isophthalate, diallyl fumarate, diallyl maleate, ethylene glycol diacrylate, ethylene glycol dimethacrylate, trimethylolpropane triacrylate, trimethylolpropane trimethacrylate, 1,6-hexanediol diacrylate, 1, 3-butyleene glycol dimethacrylate, octaallyl sucrose, and the like are suitably used as the polyfunctional monomer Z1.

Incidentally, in the case where the polyfunctional monomer has an alkylene oxide chain skeleton, an effect for enhancement of a rate of copolymerization of the reactive emulsifier is poor, and there is a tendency that the water resistance of the coating film is deteriorated, specifically a whitening (cloudiness) phenomenon of the coating film or a water absorption/swelling phenomenon is accelerated. In addition, such case is also undesirable from the viewpoints of bubbling of the polymer dispersion, a lowering of mechanical properties of the coating film, and a lowering of pressure-sensitive adhesive strength.

In view of the fact that the effects of the present invention depend on an interaction between the polymerizable unsaturated group represented by any one of the chemical formulae (1) to (3) for the reactive emulsifier Y and the polymerizable unsaturated group preferably represented by any one of the chemical formulae (4) to (6) for the polyfunctional monomer Z1 and a total addition amount of them, the addition amount of the polyfunctional monomer Z1 in the present invention is determined on the basis of the addition amount of the reactive emulsifier Y. That is, a proportion

(Z1/Y) of the total use amount of the polyfunctional monomer to the total use amount of the reactive emulsifier is in the range of Z1/Y = 1/3 to 1/30 in terms of a weight ratio, and more preferably, the ratio of Z1/Y is in the range of from 1/5 to 1/20 (weight ratio). When the addition amount of the polyfunctional monomer Z1 is more than the foregoing range, so that the Z1/Y ratio is Z1/Y > 1/3, there may be the case where the amount of an agglomerate increases at the time of emulsion polymerization, thereby generating inconveniences such as a lowering of a solid content of the polymer dispersion, a lowering of yield, a step delay to be caused due to clogging of a filtration filter, etc. As compared with the case of not adding this polyfunctional monomer, an inconvenience such that mechanical properties of the coating film are greatly lowered, pressure-sensitive adhesive strength is greatly lowered, or a good coating film cannot be fabricated is generated. On the other hand, when the addition amount of the polyfunctional monomer Z1 is less than the foregoing range, so that the Z1/Y ratio is Z1/Y < 1/30, an effect for enhancement of a rate of copolymerization of the reactive emulsifier is lowered, an effect for water resistance of the polymer coating film becomes poor, and an effect for suppression of a whitening (cloudiness) phenomenon of the coating film or suppression of a water absorption/swelling phenomenon becomes insufficient. In addition, an effect for suppression of bubbling of the polymer dispersion becomes poor.

(4) Hydrophilic monomer Z2:

Examples of the hydrophilic monomer Z2 having one polymerizable unsaturated group in a molecule, which is used in the present invention, include hydrophilic monomers having one polymerizable unsaturated group in a molecule, having a hydrophilic group selected from a hydroxyethyl group, a 2-hydroxyethoxyethyl group, a hydroxypropyl group, a 2-hydroxypropoxypropyl group, a polyoxyethylene group, a polyoxypropylene group, a glyceryl group, a polyglyceryl group, and an alkoxylated derivative of them having from 1 to 4 carbon atoms, and having an average molecular weight of less than 250. One or two or more kinds selected from these can be used. At that time, the average molecular weight of the hydrophilic monomer Z2 is preferably less than 250. When the molecular weight is 250 or more, an effect against the water resistance of the polymer coating film is poor, specifically an effect for enhancement of a rate of copolymerization of the reactive emulsifier is poor. In addition, such case is also undesirable from the viewpoints of suppression of a whitening (cloudiness) phenomenon of the coating film and suppression of a water absorption/swelling phenomenon. In addition, the amount of an agglomerate increases at the time of emulsion polymerization, thereby generating inconveniences such as a lowering of a solid content of the polymer dispersion, a lowering of yield, a step delay to be caused due to clogging of a filtration filter, etc. In addition, in the case of taking out the solid polymer or at the time of cleaning the production line, problems that not only an effect for decreasing an effluent load of waste liquid to be discharged is not found, but a drainage load is deteriorated are generated. In addition, it is preferable that the hydrophilic monomer Z2 has one group represented by any one of the foregoing chemical formulae (4) to (6) as the polymerizable unsaturated group in a molecule. Similar to the foregoing, each of $R^2$ in the formula (4) and $R^3$ in the formula (6) represents hydrogen or a methyl group; and n represents an integer of from 1 to 5, and preferably from 1 to 3.

In order that the effects of the present invention may be revealed especially conspicuously, hydroxyethyl acrylate, hydroxyethyl methacrylate, 2-(2-hydroxyethoxy)ethyl acrylate, 2-(2-hydroxyethoxy)ethyl methacrylate, hydroxypropyl acrylate, hydroxypropyl methacrylate, polyoxyethylene acrylate, polyoxyethylene methacrylate, a methoxylated derivative of them, and the like can be suitably used as the hydrophilic monomer Z2.

In view of the fact that the effects of the present invention depend on an interaction between the polymerizable unsaturated group represented by any one of the chemical formulae (1) to (3) for the reactive emulsifier Y and the polymerizable unsaturated group preferably represented by any one of the chemical formulae (4) to (6) for the hydrophilic monomer Z2 and a total addition amount of them, the addition amount of the hydrophilic monomer Z2 in the present invention is determined on the basis of the addition amount of the reactive emulsifier (Y). That is, as for the addition amount of the hydrophilic monomer Z2, a proportion (Z2/Y) of the total use amount of the hydrophilic monomer to the total use amount of the reactive emulsifier is in the range of Z2/Y = 1/1 to 1/30 in terms of a weight ratio, and more preferably, the ratio of Z2/Y is in the range of from 1/2 to 1/20 (weight ratio). When the addition amount of the hydrophilic monomer Z2 is more than the foregoing range, so that the Z2/Y ratio is Z2/Y > 1/1, there may be the case where the amount of an agglomerate increases at the time of emulsion polymerization, thereby generating inconveniences such as a lowering of a solid content of the polymer dispersion, a lowering of yield, a step delay to be caused due to clogging of a filtration filter, etc. As compared with the case of not adding this hydrophilic monomer, an inconvenience such that mechanical properties of the coating film are greatly lowered, pressure-sensitive adhesive strength is greatly lowered, or a good coating film cannot be prepared is generated. On the other hand, when the addition amount of the hydrophilic monomer Z2 is less than the foregoing range, so that the Z2/Y ratio is Z2/Y < 1/30, an effect for enhancement of a rate of copolymerization of the reactive emulsifier is lowered, an effect for water resistance of the polymer coating film becomes poor, and an effect for suppression of a whitening (cloudiness) phenomenon of the coating film or suppression of a water absorption/swelling phenomenon becomes insufficient. In addition, an effect for suppression of bubbling of the polymer dispersion becomes poor.

(5) Other additive components:

In the emulsion polymerization of the present invention, for the purposes of enhancing the polymerization stability at the time of emulsion polymerization, enhancing the miscibility with a pigment or a filler in the late step, enhancing the wettability with the base material, and the like, one or two or more kinds of general surfactants not having a polymerizable group with radical polymerizability can also be used jointly so long as the problem to be solved by the present invention is not adversely affected. The surfactant which is used jointly is not particularly limited. Examples of nonionic surfactants include a polyoxyalkylene alkyl phenyl ether, a polyoxyalkylene alkyl ether, a polyoxyalkylene styrenated phenyl ether, a polyoxyalkylene benzylated phenyl ether, a polyoxyalkylene cumyl phenyl ether, a fatty acid polyethylene glycol ether, a polyoxyalkylene sorbitan fatty acid ester, a sorbitan fatty acid ester, and the like. Examples of anionic surfactants which can be suitably used include a fatty acid soap, a rhodinic acid soap, an alkyl sulfonic acid salt, an alkylaryl sulfonic acid salt, an alkyl sulfuric acid ester salt, an alkyl sulfosuccinic acid salt; and besides, a sulfuric acid ester salt, a phosphoric acid ester salt, an ether carboxylic acid salt, a sulfosuccinic acid salt, etc. of the above-described nonionic surfactants having a polyoxyalkylene chain. In addition, examples of cationic surfactants include a stearyltrimethylammonium salt, a cetyltrimethylammonium salt, a lauryltrimethylammonium salt, a dialkyldimethylammonium salt, an alkyldimethylbenzylammonium salt, an alkyldimethylhydroxyethylammonium salt, and the like. In addition, for the purpose of enhancing the polymerization stability at the time of emulsion polymerization, a known protective colloid agent can be used jointly. Examples of the protective colloid agent which can be used jointly include fully hydrolyzed polyvinyl alcohol (PVA), partially hydrolyzed PVA, hydroxyethyl cellulose, carboxymethyl cellulose, methyl cellulose, polyacrylic acid, polyvinylpyrrolidone, and the like. In addition, though in the emulsion polymerization of the present invention, the kind of a polymerization initiator and the addition amount of them are not particularly limited, a persulfuric acid salt such as ammonium persulfate, potassium persulfate, etc. is desirable, and a peroxide such as hydrogen peroxide, benzoyl peroxide, etc. can be used. In addition, a combination of a persulfuric acid salt with a reducing agent such as an alkali metal sulfite or bisulfite, etc. can also be used as a redox-based polymerization initiator capable of commencing the polymerization reaction at a low temperature, if desired. In addition, a molecular weight modifier which is used in an emulsion polymerization step can be properly used, if desired so long as the problem to be solved by the present invention is not adversely affected. Examples of the molecular weight modifier which can be used include mercaptans such as n-dodecyl mercaptan, octyl mercaptan, t-butyl mercaptan, thioglycolic acid, thiomalic acid, thiosalicylic acid, etc.; sulfides such as diisopropyl xanthogen disulfide, diethyl xanthogen disulfide, diethylthiuram disulfide, etc.; halogenated hydrocarbons such as iodoform, etc.; diphenylethylene, p-chlorodiphenylethylene, p-cyanodiphenylethylene, an $\alpha$-methylstyrene dimer, and the like.

(6) Polymerization method:

The emulsion polymerization method which can be applied in the present invention is not particularly limited so long as it is a method of blending the above-described respective components to be used in the present invention and carrying out emulsion polymerization. The emulsion polymerization method can be properly selected among a collective polymerization method, a monomer dropping method, an emulsion dropping method, a seed polymerization method, a multi-stage polymerization method, a power feed polymerization, and the like, these methods being classified based on the monomer feeding method.

(7) Application, etc. of polymer dispersion:

The polymer dispersion obtained by the above-described emulsion polymerization method of the present invention is used for the formation of a coating film as a paint or a pressure-sensitive adhesive or the recovery of a solid polymer by a precipitating agent according to the customary method. That is, a polymer film is obtained by drying the resulting polymer dispersion at ordinary temperature or upon heating, if desired. In addition, the recovery of a solid polymer can be carried out by adding an acid or a salt which has been conventionally used as a precipitating agent and carrying out stirring to agglomerate the polymer, followed by filtration or the like.

Examples

The present invention is more specifically described by reference to the following Examples, but it is to be construed that the present invention is not limited to the following Examples. Incidentally, the terms "parts" and "%" are "parts by weight" and "% by weight", respectively unless otherwise indicated.

1. Reactive emulsifier:

The reactive emulsifier which can be used in the present invention may be either a commercial product or a prototype so long as the requirements specified in the present invention are satisfied, and reactive emulsifiers as shown below were offered for an experiment in the Examples for the purpose of illustrating the effects of the present invention. Incidentally, with respect to materials which had not been available as a commercial product, reactive emulsifiers synthesized under the following conditions were offered for an experiment.

Reactive Emulsifier [1]:

A reactive emulsifier (AQUALON KH-10, manufactured by Dai-ichi Kogyo Seiyaku Co., Ltd.) having the following structural formula was offered for an experiment.

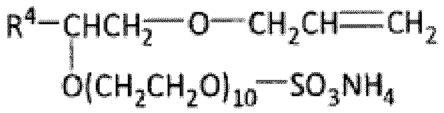

$R^4$ : $C_{10}$, $C_{12}$

Reactive Emulsifier [2]:

A reaction product between an α-olefin epoxide having a carbon number of 12 and 14 and allyl alcohol, which is a precursor (prior to an addition reaction with ethylene oxide) of the above-described Reactive Emulsifier [1], was allowed to react with ethylene oxide in an amount corresponding to 20 moles in the presence of potassium hydroxide as a catalyst, thereby obtaining nonionic Reactive Emulsifier [2] represented by the following structural formula.

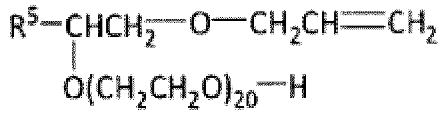

$R^5$ : $C_{10}$, $C_{12}$

Reactive Emulsifier [3]:

A reaction product between an α-olefin epoxide having a carbon number of 12 and 14 and allyl alcohol, which is a precursor (prior to an addition reaction with ethylene oxide) of the above-described Reactive Emulsifier [1], was allowed to react with ethylene oxide in an amount corresponding to 5 moles in the presence of potassium hydroxide as a catalyst, from which was then obtained Reactive Emulsifier [3] represented by the following structural formula according to a known method (described in JP-A-7-18009).

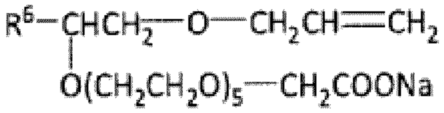

$R^6$ : $C_{10}$, $C_{12}$

Reactive Emulsifier [4]:

In a 3L stainless steel-made pressurized reactor equipped with a stirrer, a thermometer, a nitrogen inlet tube, and an ethylene oxide inlet tube and having a heating/cooling function, 678 g (3 moles) of isopentadecene oxide, 174 g (3 moles) of allyl alcohol, and 30 g of sodium hydroxide as a catalyst were charged, and after substituting the atmosphere within the reactor with nitrogen, the contents were allowed to react with each other at 90°C for 5 hours. Subsequently, the resultant was allowed to react at 130°C and 0.25 MPa while gradually introducing 1, 320 g (30 moles) of ethylene oxide, and thereafter, stirring was continued for one hour while keeping the temperature, thereby achieving ripening. After termination of ripening, the resultant was cooled to 40°C, and acetic acid in a neutralizing equivalent amount relative to the catalyst was charged, followed by stirring for 30 minutes. Thereafter, a precipitate was filtered using a filtration auxiliary, thereby obtaining an isopentadecene oxide (1 mole)/ethylene oxide (10 moles) adduct of allyl alcohol. Subsequently, 1,448 g of the resulting isopentadecene oxide (1 mole)/ethylene oxide (10 moles) adduct of allyl alcohol was charged in a 3L glass-made reactor equipped with a stirrer, a thermometer, and a nitrogen inlet tube and having a heating/cooling function, 196 g of sulfamic acid was charged, and the contents were allowed to react with each other at 120°C for 3 hours under a strong stirring condition to achieve sulfation, thereby obtaining Reactive Emulsifier [4] represented by the following structural formula.

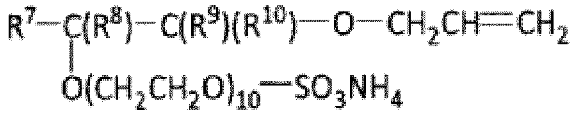

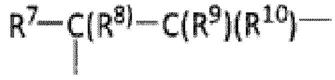

Reactive Emulsifier [5]:

In a 3L stainless steel-made pressurized reactor equipped with a stirrer, a thermometer, a nitrogen inlet tube, and an ethylene oxide inlet tube and having a heating/cooling function, 517 g (3 moles) of isoundecyl alcohol and 10 g of sodium hydroxide as a catalyst were charged, and after substituting the atmosphere within the reactor with nitrogen, 342 g (3 moles) of allyl glycidyl ether was charged at 90°C, followed by ripening at 90°C for 5 hours. Subsequently, the resultant was allowed to react at 130°C and 0.25 MPa while gradually introducing 1,320 g (30 moles) of ethylene oxide, and thereafter, stirring was continued for one hour while keeping the temperature, thereby achieving ripening. After termination of ripening, the resultant was cooled to 40°C, and acetic acid in a neutralizing equivalent amount relative to the catalyst was charged, followed by stirring for 30 minutes. Thereafter, a precipitate was filtered using a filtration auxiliary, thereby obtaining an allyl glycidyl ether (1 mole)/ethylene oxide (10 moles) adduct of isoundecyl alcohol. Subsequently, 1,453 g of the resulting allyl glycidyl ether (1 mole)/ethylene oxide (10 moles) adduct of isoundecyl alcohol was charged in a 3L glass-made reactor equipped with a stirrer, a thermometer, and a nitrogen inlet tube and having a heating/cooling function, 196 g of sulfamic acid was charged, and the contents were allowed to react with each other at 120°C for 3 hours under a strong stirring condition to achieve sulfation, thereby obtaining Reactive Emulsifier [5] represented by the following structural formula.

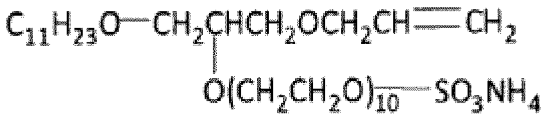

Reactive Emulsifier [6]

In a 3L stainless steel-made pressurized reactor equipped with a stirrer, a thermometer, a nitrogen inlet tube, and an alkylene oxide inlet tube and having a heating/cooling function, 228 g (2 moles) of allyl alcohol and 14 g of potassium methoxide as a catalyst were charged, and methanol was removed in a reduced pressure condition. Thereafter, the resultant was allowed to react while heating to 130°C and while gradually introducing 464 g (8 moles) of propylene oxide, and thereafter, stirring was continued for one hour while keeping the temperature, thereby achieving ripening. Subsequently, the resultant was cooled to 40°C, and 330 g (2.2 moles) of phenyl glycidyl ether was charged, followed by again increasing the temperature to 90°C. Thereafter, stirring was carried out for 15 hours, the resultant was further allowed to react at 0.25 MPa while gradually introducing 1,056 g (24 moles) of ethylene oxide, and stirring was continued for one hour while keeping the temperature, thereby achieving ripening. After termination of ripening, the resultant was cooled to 40°C, and acetic acid in a neutralizing equivalent amount relative to the catalyst was charged, followed by stirring for 30 minutes. Thereafter, a precipitate was filtered using a filtration auxiliary, thereby obtaining a propylene oxide (4 moles)/phenyl glycidyl ether (1 mole)/ethylene oxide (12 moles) adduct of allyl alcohol. Subsequently, 1,039 g of the resulting propylene oxide (4 moles)/phenyl glycidyl ether (1 mole)/ethylene oxide (12 moles) adduct of allyl alcohol was charged in a 3L glass-made reactor equipped with a stirrer, a thermometer, and a nitrogen inlet tube and having a heating/cooling function, 98 g of sulfamic acid was charged, and the contents were allowed to react with each other at 120°C for 3 hours under a strong stirring condition to achieve sulfation, thereby obtaining Reactive Emulsifier [6] represented by the following structural formula.

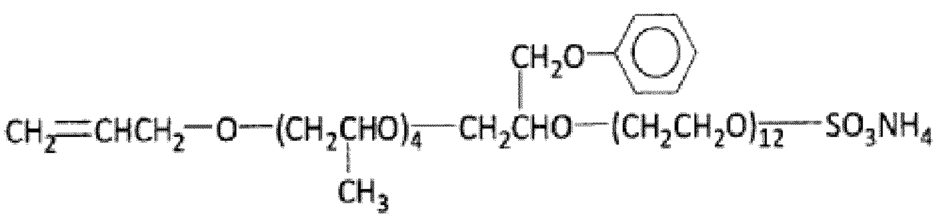

Reactive Emulsifier [7]

Reactive Emulsifier [7] represented by the following structural formula that is a sulfuric acid ester ammonium salt of a butylene oxide (3 moles)/2-ethylhexyl glycidyl ether (1 mole)/ethylene oxide (10 moles) adduct of allyl alcohol was obtained in the same operations as those in the production example of the above-described Reactive Emulsifier [6], except for changing the propylene oxide and the phenyl glycidyl ether to butylene oxide and 2-ethylhexyl glycidyl ether, respectively.

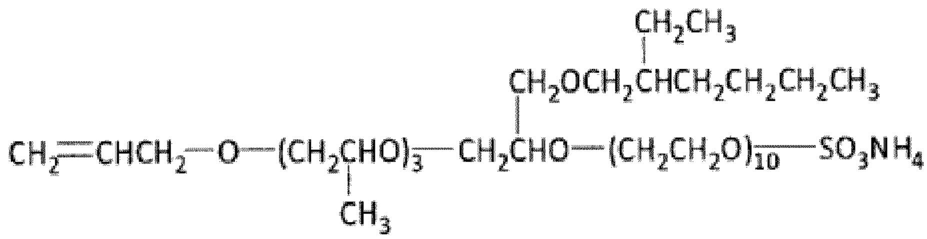

Reactive Emulsifier [8]

In a 3L glass-made reactor equipped with a stirrer, a thermometer, a reflux condenser, and a nitrogen inlet tube and having a heating/cooling function, 491 g (5 moles) of maleic anhydride and 290 g (5 moles) of allyl alcohol were charged, the temperature was gradually increased, and the contents were allowed to react with each other at 60°C for 2 hours with stirring. Thereafter, 930 g (5 moles) of lauryl alcohol, 15 g of p-toluenesulfonic acid, and 15 g of hydroquinone were charged, the temperature was gradually increased to 140°C with stirring while removing formed water, and the contents were allowed to react with each other for 5 hours, thereby obtaining allyl lauryl maleate. Subsequently, 320 of the resulting allyl lauryl maleate was charged in a separately prepared similar 5L glass-made reactor, and thereafter, 1, 000 mL of distilled water was charged with stirring. 104 g of acidic sodium sulfite was further added, and the contents were allowed to react with each other at 90°C for 5 hours. Subsequently, the resultant was concentrated under reduced pressure, thereby obtaining a 40 % aqueous solution of Reactive Emulsifier [8] (sodium allyl lauryl sulfosuccinate) represented by the following structural formula.

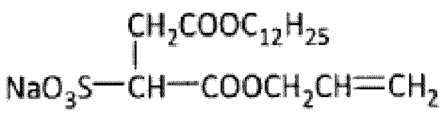

Reactive Emulsifier [9]:

In a 3L glass-made reactor equipped with a stirrer, a thermometer, a reflux condenser, and a nitrogen inlet tube and having a heating/cooling function, 294 g (3 moles) of maleic anhydride and 558 g (3 moles) of lauryl alcohol were charged, the temperature was gradually increased, and the contents were allowed to react with each other at 80°C for 2 hours with stirring. Subsequently, 1, 000 mL of heptane was added, and after a reaction crude product became uniform, the resultant was cooled to room temperature. Thereafter, the resultant was allowed to stand at room temperature for 5 hours, and a deposit was then recovered by means of filtration, thereby obtaining 740 g of monolauryl maleate. Subsequently, 145 g of potassium hydroxide was suspended in 1,500 mL of tert-butyl alcohol, to which was then added 740 g of the monolauryl maleate, and the contents were stirred at room temperature for one hour. Thereafter, the tert-butyl alcohol was removed under reduced pressure to obtain Reactive Emulsifier [9] represented by the following structural formula.

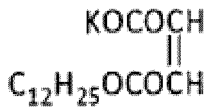

Reactive Emulsifier [10]:

A reactive emulsifier (AQUALON BC-10 (HITENOL BC-10), manufactured by Dai-ichi Kogyo Seiyaku Co., Ltd.) represented by the following structural formula was offered for an experiment.

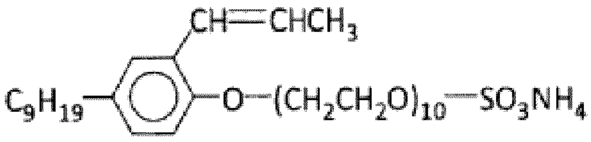

Reactive Emulsifier [11]:

A reactive emulsifier (HITENOL A-10, manufactured by Dai-ichi Kogyo Seiyaku Co., Ltd.) represented by the following structural formula was offered for an experiment.

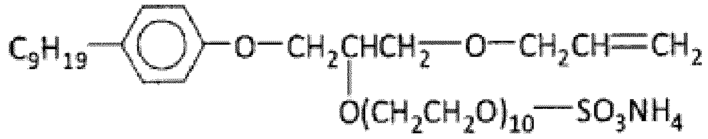

Reactive Emulsifier [12]:

In a 3L stainless steel-made pressurized reactor equipped with a stirrer, a thermometer, a nitrogen inlet tube, and an ethylene oxide inlet tube and having a heating/cooling function, 558 g (3 moles) of lauryl alcohol and 1.8 g of boron trifluoride ether as a catalyst were charged, and after substituting the atmosphere within the reactor with nitrogen, 426 g (3 moles) of glycidyl methacrylate was charged, followed by ripening at 80°C for 5 hours. Subsequently, the resultant was allowed to react at 130°C and 0.25 MPa while gradually introducing 1,320 g (30 moles) of ethylene oxide, and thereafter, stirring was continued for one hour while keeping the temperature, thereby achieving ripening. After termination of ripening, the resultant was cooled to 40°C, and acetic acid in a neutralizing equivalent amount relative to the catalyst was charged, followed by stirring for 30 minutes. Thereafter, a precipitate was filtered using a filtration auxiliary, thereby obtaining a glycidyl methacrylate (1 mole) /ethylene oxide (10 moles) adduct of lauryl alcohol. Subsequently, 1,152 g of the resulting glycidyl methacrylate (1 mole) /ethylene oxide (10 moles) adduct of lauryl alcohol was charged in a 3L glass-made reactor equipped with a stirrer, a thermometer, and a nitrogen inlet tube and having a heating/cooling function, 196 g of sulfamic acid was charged, and the contents were allowed to react with each other at 120°C for 3 hours under a strong stirring condition to achieve sulfation, thereby obtaining Reactive Emulsifier [12] (a compound disclosed in JP-A-63-183998) represented by the following structural formula.

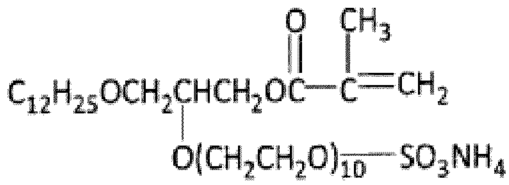

Reactive Emulsifier [13]

Reactive Emulsifier [13] (a compound disclosed in JP-A-8-41113) represented by the following structural formula that is a sulfuric acid ester ammonium salt of a vinyl benzyl glycidyl ether (1 mole)/ethylene oxide (10 moles) adduct of lauryl alcohol was obtained in the same operations as those in the production example of the above-described Reactive Emulsifier [5], except for changing the allyl glycidyl ether and the isoundecyl alcohol to vinyl benzyl glycidyl ether and lauryl alcohol, respectively.

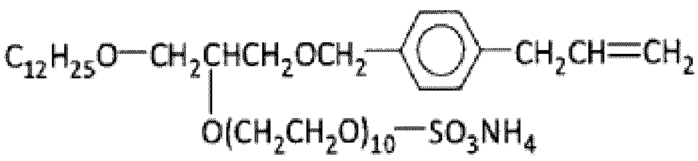

2. Preparation of polymer dispersion using a polyfunctional monomer and evaluation of resulting polymer dispersion and polymer film:

[Experiment 1: Preparation of methyl methacrylate/butyl acrylate-based polymer dispersion] (Examples 1-1 to 1-10 and Comparative Examples 1-1 to 1-9)

123.75 g of methyl methacrylate, 123.75 g of butyl acrylate, and 2.5 g of acrylic acid were blended as monomers, and subsequently, the blend was mixed with prescribed amounts of an emulsifier and a polyfunctional monomer as described in Table 1 and further 105 g of ion-exchanged water by using a homomixer, thereby preparing a mixed monomer emulsion.

Subsequently, in a reactor equipped with a stirrer, a reflux condenser, a thermometer, a nitrogen inlet tube, and a dropping funnel, 122 g of ion-exchanged water and 0.25 g of sodium hydrogen carbonate were charged, and stirring was continued while ventilating nitrogen, into which was then charged 36 g of a part of the above-described previously prepared mixed monomer emulsion, followed by increasing the temperature to 80°C. Thereafter, after continuing the stirring for 15 minutes, a solution of 0.5 g of ammonium persulfate as a polymerization initiator in 20 g of ion-exchanged water was added to commence polymerization. Subsequently, 15 minutes after adding the polymerization initiator, 324 parts of a residue of the mixed monomer emulsion was dropped over 3 hours, thereby achieving polymerization. Furthermore, ripening was subsequently carried out for 2 hours, and the resultant was cooled and adjusted at a pH of 8 with ammonia water. There were thus obtained polymer dispersions to be provided for the evaluation experiments of the present invention.

[Experiment 2: Preparation of styrene/butyl acrylate-based polymer dispersion] (Examples 2-1 to 2-8 and Comparative Examples 2-1 to 2-11)

Polymer dispersions to be provided for the evaluation experiments of the present invention were obtained by carrying out the emulsion polymerization in the same operations as those in Example 1, except for changing the monomer components in the above-described Experiment 1 from methyl methacrylate and butyl acrylate to styrene and butyl acrylate, respectively and changing the emulsifier and the polyfunctional monomer to those as described in Table 2.

[Experiment 3: Preparation of styrene/butadiene dispersion] (Examples 3-1 to 3-9 and Comparative Example 3-1 to 3-7)

60 g of ion-exchanged water was charged in a pressure glass bottle as a reactor, specifically an empty bottle for carbonated drink, dissolved oxygen was removed with a nitrogen gas, and the glass bottle was then cooled in an ice water bath. Thereafter, the emulsifier and the polyfunctional monomer as described in Table 3 were added, 0.12 g of a naphthalenesulfonic acid formalin condensate, 0.12 g of sodium carbonate, and 0.12 g of dodecyl mercaptan were further added, and the glass bottle was temporarily plugged with a rubber stopper. The contents of the glass bottle were lightly shaken by hand and made uniform, and the bottle was then opened. 20 g of styrene and 0.12 g of potassium persulfate were charged, and the glass bottle was again temporarily plugged with a rubber stopper and then allowed to stand under cooling in an ice water bath. Subsequently, butadiene was introduced from a butadiene cylinder into a graduated sample collecting tube in a methanol dry ice bath and liquefied, and 20 g of weighed butadiene was charged in the glass bottle using a syringe equipped with a stop-cock. Immediately thereafter, the glass bottle was covered by a prescribed metal-made cap and capped, thereby preparing a bottle polymerization reactor. Subsequently, the capped glass bottle was strongly shaken to render the content liquid in the glass bottle in an emulsified state. Subsequently, the glass bottle was set in a holder within a rotary polymerization tank for bottle polymerization adjusted at a water temperature of 50°C, and the emulsion was polymerized at a number of revolutions of 50 rpm for 20 hours, thereby achieving emulsion polymerization by the bottle polymerization method. Thereafter, the glass bottle was put into an ice water bath and cooled, followed by opening. 0.12 g of p-tert-butyl catechol was added, and the unreacted butadiene was volatilized and distilled off by means of bubbling with a nitrogen gas within a draft, thereby obtaining a polymer dispersion.

[Experiment 4: Preparation of acrylonitrile/butadiene/styrene resin] (Examples 4-1 to 4-8 and Comparative Examples 4-1 to 4-8)

In a 0.75L stainless steel-made pressurized reactor equipped with a stirrer, a thermometer, a nitrogen inlet tube, and a gas inlet tube and having a heating/cooling function, 100 g of ion-exchanged water, 0.5 g of a naphthalenesulfonic acid formalin condensate, 0.5 g of sodium carbonate, and 0.5 g of dodecyl mercaptan were charged, an emulsifier (3.0 g) as described in Table 4 was added, and 0.3 g of potassium persulfate was further added, followed by substituting the inside of the reactor with nitrogen. Subsequently, coolant water at -5°C was allowed to pass through a jacket part of the reactor, thereby cooling the contents. Thereafter, 100 g of butadiene was introduced from a butadiene

cylinder into the reactor, and the contents were rendered in an emulsified state by means of high-speed stirring. Subsequently, the temperature within the reactor was increased to 60°C, the emulsion was polymerized under a stirring condition, and the reaction was then terminated within the range of a solid content of from 40 to 43 % (butadiene conversion: 80 ± 3 %). On that occasion, the time required was about 35 hours.

After termination of the polymerization, the resultant was cooled, and the unreacted butadiene was distilled off under reduced pressure, thereby obtaining a polybutadiene dispersion. Subsequently, in a reactor equipped with a stirrer, a reflux condenser, a thermometer, a nitrogen inlet tube, and a dropping funnel and having a heating/cooling function, 64 g of the polybutadiene dispersion having a solid content of 40% by weight as prepared in the above-described operations and 36 g of ion-exchanged water were charged. Subsequently, 75 g of styrene, 19 g of acrylonitrile, 100 g of ion-exchanged water, and further the reactive emulsifier (1.9 g) and the polyfunctional monomer as described in Table 4 were further added. 13 g of a mixed monomer emulsion which had been separately obtained by mixing and stirring was added to the reactor with stirring, followed by substitution with nitrogen. Subsequently, coolant water at 10°C was allowed to pass through the reactor to adjust the internal temperature, and 0.24 g of p-menthane hydroperoxide, 0.12 g of ferrous sulfate heptahydrate, and 0.06 g of sodium formaldehyde sulfoxide were added, thereby carrying out preceding polymerization. Subsequently, 15 minutes after commencing the polymerization, the remaining mixed monomer emulsion was dropped over 3 hours, thereby achieving the polymerization. Furthermore, ripening was subsequently carried out at the polymerization temperature for 2 hours, and thereafter, N,N-diethylhydroxylamine was added to terminate the polymerization. Subsequently, a nitrogen gas was ventilated, and the residual monomer was distilled off under reduced pressure, thereby obtaining a polymer dispersion.

Subsequently, with respect to 50 g of the resulting polymer dispersion, 1 % sulfuric acid was added to adjust a pH of it to not more than 2. As a result, the polymer dispersion was destroyed, and a polymer was immediately deposited. Subsequently, the temperature was increased to 60°C with stirring, and the pH was adjusted to be neutral with a sodium hydroxide aqueous solution. Thereafter, the resultant was allowed to stand, thereby floating a polymer. Subsequently, this was recovered with a 200-mesh filter cloth and washed three times with warm water. The polymer was then dehydrated and dried. At that time, the whole of wastewater at the time of polymer recovery was recovered, concentrated, and then offered for the measurement of a total organic carbon (TOC) amount.

1

With respect to the polymer dispersions and the polymer films obtained in the respective Examples and Comparative Examples of Experiments 1 to 4 as described above, the following evaluation tests were carried out. Results of them are shown in Tables 1 to 4.

(1) Evaluation of polymer dispersion:

Solid content, polymerization stability, average particle diameter, rate of copolymerization of reactive emulsifier, foamability, mechanical stability, and filterability were measured or evaluated according to the following methods.

Solid content:

2 g of the polymer dispersion was weighed in an aluminum-made cup and dried at 105°C for 2 hours. Thereafter, a solid content weight was determined from a weight of the residue, and the solid content weight was expressed in terms of "% by weight" relative to the weighed amount of the dispersion.

Polymerization stability:

In the polymer dispersion, an agglomerate formed during the emulsion polymerization step was filtered with an 80-mesh wire gauze, and a filtration residue was washed with water and then dried at 105°C for 2 hours. A weight of it was expressed in terms of "% by weight" relative to the solid content of the dispersion. Incidentally, in this measurement, it is meant that the smaller the amount of an agglomerate is, the higher the polymerization stability in the emulsion polymerization step is.

Average particle diameter:

A part of the polymer dispersion was taken and measured with respect to a particle diameter of it by using a dynamic light scattering particle size distribution analyzer (MICROTRAC UPA9340, manufactured by Nikkiso Co., Ltd.).

Rate of copolymerization of reactive emulsifier:

A fixed amount of the polymer dispersion was weighed, and an excess of methanol was added. This methanol

dilute solution was subjected to a centrifugation treatment to separate it into a polymer and a supernatant, respectively. Subsequently, the supernatant was recovered and distilled under reduced pressure. Thereafter, a rate of copolymerization of the emulsifier was measured by means of 1H-NMR of the resulting residue.

Foamability:

100 mL of the polymer dispersion and 100 mL of water were taken into a 1L measuring cylinder, and the temperature was adjusted at 25°C. Thereafter, the resultant was allowed to pass through 502G-No. 2 (40 to 50 μm) of a Kinoshita type glass ball filter, and a nitrogen gas was ventilated at a rate of 300 mL/min for one minute. Thereafter the ventilation of a nitrogen gas was stopped, and immediately thereafter, a foam height (foam amount) was read out as an immediate foam height (mL). In addition, a foam height (foam amount) 5 minutes after stopping the ventilation of a nitrogen gas was further read out as a foam height (mL) after 5 minutes, and foam breaking properties (%) were determined according to the following calculation equation. Incidentally, in that case, it is meant that the lower the immediate foam height (mL) is or the lower the foam breaking properties (%) are, the lower the foamability of the polymer dispersion is.

$$\text{Foam breaking properties (\%)} = \{\text{Foam height (mL) after 5 minutes}\} / \{\text{Immediate foam height (mL)}\} \times 100$$

Mechanical stability:

50 g of the polymer dispersion was weighed and treated at a load of 10 kg and a number of revolutions of 1,000 rpm for 5 minutes by using a Marlon type tester, and a formed agglomerate was filtered with a 150-mesh wire gauze. The residue was washed with water and then dried at 105°C for 2 hours. A weight of it was expressed in terms of "% by weight" relative to the solid content of the dispersion. Incidentally, in this measurement, it is meant that the smaller the amount of an agglomerate is, the higher the stability of the polymer dispersion under a high shear condition is.

Filter filterability:

80 g of the resulting polymer dispersion was subjected to gravity filtration with a 200-mesh wire gauze, and the time required for the filtration was measured. At the same time, the status of the agglomerate residue remaining on the wire gauze was visually confirmed, and the filter filterability was evaluated on the basis of the following criteria. Incidentally, in this measurement, it is meant that the shorter of the filtration time is and the smaller the amount of the residue on the wire gauze is, the higher the polymerization stability in the emulsion polymerization step, the higher the yield on the commercial production, and the smaller the generation of a step trouble to be caused due to clogging of the filtration filter are.

◎ : The time required for the filtration is within 15 seconds, and any solid substance is not found on the wire gauze.
○: Though the time required for the filtration is within 15 seconds, a solid residue is slightly found on the wire gauze.
Δ: The time required for the filtration is more than 15 seconds and not more than 30 seconds, and a solid residue is found on the wire gauze.
×: The time required for the filtration is more than 30 seconds, or clogging is observed, and a solid residue is largely found on the wire gauze.

(2) Evaluation of polymer film:

Resistance to water-whitening, peeling state, and coefficient of water absorption were measured or evaluated according to the following methods.

Test of resistance to water-whitening:

The resulting polymer dispersion was coated in a film thickness of 120 μm (dry) on a commercially available glass sheet and dried under an atmosphere of 20°C x 65 %RH for 24 hours. The resultant was dipped in ion-exchanged water at 25°C, and the glass sheet was placed on 16-point printing letters. When the letters were seen through the

polymer film, the number of days until the letters became disappeared was measured.

Evaluation of peeling state:

The state of the polymer film at a point of time at which the 16-point letters became disappeared in the above-described test of resistance to water-whitening was visually observed and evaluated on the basis of the following criteria.
◎ : The polymer film does not peel off at all.
○: The circumstance of the polymer film slightly peels off.
Δ: Almost all parts of the polymer film peels off from the glass.
×: The polymer film entirely peels off from the glass.

Coefficient of water absorption:

The resulting polymer dispersion was coated in a film thickness of 120 μm (dry) on a commercially available glass sheet and dried under an atmosphere of 20°C x 65 %RH for 24 hours. The polymer film was carefully peeled off from the glass sheet, the polymer film was cut out in a size of 5 cm x 5 cm, and the weight (initial weight) of the polymer film was measured. Subsequently, this was dipped in ion-exchanged water at 25°C, and 24 hours thereafter, the polymer film was taken out from the water. The moisture on the surface of the polymer film was lightly wiped off with a clean filter paper, and the weight (weight after dipping) of the polymer film was then measured. The coefficient of water absorption of the film was determined according to the following equation.

$$\text{Coefficient of water absorption (\% by weight)} = [\{(\text{Weight of polymer film after dipping}) - (\text{Initial weight of polymer film})\} / (\text{Initial weight of polymer film})] \times 100$$

Polymer recovery rate and evaluation of effluent load in polymer recovery step:

The polymer recovery rate and the total organic carbon (TOC) were measured according to the following methods.

Polymer recovery rate:

The agglomerated polymer obtained in the polymer recovery step was dehydrated and then dried under reduced pressure at 105°C, thereby determining the weight of the recovered polymer. The polymer recovery rate was expressed in terms of "% by weight" relative to a theoretical solid content weight calculated from a solid content value of the polymer dispersion.

Measurement of total organic carbon (TOC):

The whole of wastewater (including polymer washing water) obtained in the polymer recovery step was recovered and concentrated to 100 mL. Thereafter, a part of it was collected and measured with respect to the total organic carbon (TOC) amount (ppm) by using a total organic carbon meter TOC-VCPH, manufactured by Shimadzu Corporation. Incidentally, in this measurement, it is meant that the smaller the TOC value is, the smaller the amount of organic materials such as the emulsifier flowing out into the wastewater, the unreacted monomer, and the oligomer component, and the more reduced the effluent load in the polymer recovery step are.

[Table 1]

| Formulation/composition (charge unit (g)) | | Example 1-1 | 1-2 | 1-3 | 1-4 | 1-5 | 1-6 | 1-7 | 1-8 | 1-9 | 1-10 | Comparative Example 1-1 | 1-2 | 1-3 | 1-4 | 1-5 | 1-6 | 1-7 | 1-8 | 1-9 |
|---|---|---|---|---|---|---|---|---|---|---|---|---|---|---|---|---|---|---|---|---|
| Methyl methacrylate | | 123.75 | | | | | | | | | | | | | | | | | | |
| Butyl acrylate | | 123.75 | | | | | | | | | | | | | | | | | | |
| Acrylic acid | | 2.5 | | | | | | | | | | | | | | | | | | |
| Ammonium persulfate | | 0.5 | | | | | | | | | | | | | | | | | | |
| Sodium hydrogen carbonate | | 0.25 | | | | | | | | | | | | | | | | | | |
| Ion-exchanged water | | Balance *1 | | | | | | | | | | | | | | | | | | |
| [Emulsifier] (reactive group in the parenthesis) | | | | | | | | | | | | | | | | | | | | |
| Reactive Emulsifier [1] (allyl type) | | 5.0 | | | | | | | | | | 5.0 | | | | | | | | |
| Reactive Emulsifier [4] (allyl type) | | | 5.0 | 5.0 | 5.0 | 5.0 | 5.0 | | | | | | 5.0 | 5.0 | | | | | | |
| Reactive Emulsifier [8] (allyl type) (active component: 40%) | | | | | | | | | 12.5 | | | | | | | | | | | |
| Reactive Emulsifier [10] (propenyl type) | | | | | | | | | | 5.0 | | | | | | | | | | |
| Reactive Emulsifier [1] (allyl type)/Reactive Emulsifier [2] (allyl | | | | | | | | | | | 1.5/3.5 | | | | | | | | | |
| Reactive Emulsifier [12] (methacrylate type) | | | | | | | | | | | | | | | 5.0 | 5.0 | | | | |
| Reactive Emulsifier [13] (vinyl type) | | | | | | | | | | | | | | | | | 5.0 | 5.0 | | |
| HITENOL LA-12 *2 | | | | | | | | | | | | | | | | | | | 5.0 | 5.0 |
| [Polyfunctional monomer] | | | | | | | | | | | | | | | | | | | | |
| Trimethylolpropane triacrylate | | | 0.5 | | | | | | | | | | | | | | | | | |
| Ethylene glycol dimethacrylate | | | | 0.5 | 1.0 | | | | | | | | | 2.0 | | | | | | |
| Triallyl cyanurate | | 0.5 | | | | 0.5 | | 0.5 | 0.5 | 0.5 | 0.5 | | | | 0.5 | | 0.5 | | 0.5 | |
| Triallyl isocyanurate | | | | | | | 0.5 | | | | | | | | | | | | | |
| Total charge amount | | 500.0 | | | | | | | | | | | | | | | | | | |
| [Evaluation item] | | | | | | | | | | | | | | | | | | | | |
| Polymer dispersion | Solid content (% by weight) | 51.1 | 51.2 | 51.2 | 51.2 | 51.0 | 51.1 | 50.6 | 50.8 | 51.1 | 50.4 | 51.0 | 51.1 | 50.2 | 51.1 | 51.0 | 51.0 | 51.2 | 50.7 | 51.1 |
| | Polymerization stability (% by weight) | 0.10 | 0.08 | 0.09 | 0.10 | 0.09 | 0.10 | 0.16 | 0.17 | 0.06 | 0.14 | 0.07 | 0.08 | 0.89 | 0.82 | 0.75 | 0.47 | 0.88 | 0.09 | 0.08 |
| | Average particle diameter (μm) | 0.18 | 0.18 | 0.17 | 0.18 | 0.17 | 0.17 | 0.20 | 0.17 | 0.19 | 0.35 | 0.18 | 0.18 | 0.28 | 0.23 | 0.21 | 0.25 | 0.25 | 0.17 | 0.17 |
| | Foamability: Immediate foam height (mL) | 285 | 295 | 300 | 285 | 290 | 295 | 275 | 310 | 290 | 285 | 350 | 340 | 270 | 355 | 365 | 355 | 320 | 690 | 705 |
| | Foamability: Foam breaking properties (%) | 52 | 53 | 55 | 48 | 53 | 52 | 50 | 49 | 51 | 55 | 74 | 72 | 48 | 56 | 59 | 61 | 48 | 83 | 88 |
| | Mechanical stability (% by weight) | < 0.01 | 0.01 | < 0.01 | 0.03 | 0.02 | 0.03 | 0.09 | 0.05 | 0.02 | < 0.01 | < 0.01 | < 0.01 | 2.03 | 0.83 | 0.45 | 0.45 | 0.66 | 0.03 | 0.02 |
| Polymer film | Resistance to water-whitening (number of days) | > 30 | > 30 | > 30 | > 30 | > 30 | > 30 | > 30 | > 30 | > 30 | > 30 | > 30 | > 30 | 4 | 15 | 14 | 7 | 8 | 4 | 4 |
| | Peeling | ◎ | ◎ | ◎ | ◎ | ◎ | ◎ | ◎ | ◎ | ◎ | ◎ | ◎ | ◎ | × | △ | △ | × | △ | ○ | ○ |
| | Coefficient of water absorption (% by weight) | 9.5 | 9.7 | 9.3 | 6.8 | 9.4 | 9.7 | 11.6 | 12.1 | 11.2 | 10.5 | 18.0 | 17.5 | 10.5 | 26.7 | 27.5 | 26.4 | 25.8 | 28.8 | 29.5 |

*1) Adjusted by the concentration of active component of emulsifier

*2) Polyoxyethylene laurylether ammonium sulfate (reactive group-free anionic general-purpose emulsifier for emulsion polymerization), manufactured by Dai-ichi Kogyo Seiyaku Co., Ltd.

[Table 2]

| Formulation/composition (charge unit (g)) | | Example 2-1 | Example 2-2 | Example 2-3 | Example 2-4 | Example 2-5 | Example 2-6 | Example 2-7 | Example 2-8 | Comparative Example 2-1 | Comparative Example 2-2 | Comparative Example 2-3 | Comparative Example 2-4 | Comparative Example 2-5 | Comparative Example 2-6 | Comparative Example 2-7 | Comparative Example 2-8 | Comparative Example 2-9 | Comparative Example 2-10 | Comparative Example 2-11 |
|---|---|---|---|---|---|---|---|---|---|---|---|---|---|---|---|---|---|---|---|---|
| Styrene | | 123. 75 | | | | | | | | | | | | | | | | | | |
| Butyl acrylate | | 123. 75 | | | | | | | | | | | | | | | | | | |
| Acrylic acid | | 2. 5 | | | | | | | | | | | | | | | | | | |
| Ammonium persulfate | | 0. 5 | | | | | | | | | | | | | | | | | | |
| Sodium hydrogen carbonate | | 0. 25 | | | | | | | | | | | | | | | | | | |
| Ion-exchanged water | | Balance *1 | | | | | | | | | | | | | | | | | | |
| [Emulsifier] (reactive group in the parenthesis) | | | | | | | | | | | | | | | | | | | | |
| Reactive Emulsifier [1] (allyl type) | | 5. 0 | 5. 0 | 5. 0 | 5. 0 | 5. 0 | | | | 5. 0 | 5. 0 | | | | | | | | | |
| Reactive Emulsifier [5] (allyl type) | | | | | | | 5. 0 | | | | | 5. 0 | | | | | | | | |
| Reactive Emulsifier [6] (allyl type) | | | | | | | | 5. 0 | | | | | 5. 0 | | | | | | | |
| Reactive Emulsifier [8] (allyl type) (active component: 40%) | | | | | | | | | 12. 5 | | | | | 12. 5 | | | | | | |
| Reactive Emulsifier [12] (methacrylate type) | | | | | | | | | | | | | | | 5. 0 | 5. 0 | | | | |
| Reactive Emulsifier [13] (vinyl type) | | | | | | | | | | | | | | | | | 5. 0 | 5. 0 | | |
| HITENOL NF-13 *2 | | | | | | | | | | | | | | | | | | | 5. 0 | 5. 0 |
| [Polyfunctional monomer] | | | | | | | | | | | | | | | | | | | | |
| Trimethylolpropane triacrylate | | 0. 5 | | | | | | | | | | | | | | | | | | |
| Ethylene glycol dimethacrylate | | | 0. 5 | | | | | | | | | | | | | | | | | |
| Triallyl cyanurate | | | | 0. 5 | 1. 0 | | 0. 5 | 0. 5 | 0. 5 | | 2. 0 | | | | 0. 5 | | 0. 5 | | 0. 5 | |
| Triallyl isocyanurate | | | | | | 0. 5 | | | | | | | | | | | | | | |
| Total charge amount | | 500. 0 | | | | | | | | | | | | | | | | | | |
| [Evaluation item] | | | | | | | | | | | | | | | | | | | | |
| Polymer dispersion | Solid content (% by weight) | 51. 1 | 50. 8 | 50. 9 | 51. 1 | 50. 7 | 50. 8 | 50. 6 | 50. 5 | 50. 1 | 49. 5 | 50. 2 | 49. 8 | 49. 9 | 50. 8 | 51. 0 | 50. 8 | 51. 2 | 51. 1 | 51. 0 |
| | Polymerization stability (% by weight) | 0. 11 | 0. 10 | 0. 11 | 0. 15 | 0. 11 | 0. 12 | 0. 16 | 0. 13 | 0. 10 | 0. 82 | 0. 13 | 0. 15 | 0. 11 | 3. 02 | 3. 05 | 4. 04 | 4. 60 | 0. 20 | 0. 14 |
| | Average particle diameter (μm) | 0. 15 | 0. 15 | 0. 15 | 0. 16 | 0. 15 | 0. 15 | 0. 19 | 0. 15 | 0. 15 | 0. 19 | 0. 15 | 0. 20 | 0. 15 | 0. 20 | 0. 19 | 0. 20 | 0. 21 | 0. 17 | 0. 16 |
| | Foamability: Immediate foam height (mL) | 275 | 280 | 285 | 275 | 285 | 290 | 285 | 315 | 345 | 315 | 340 | 315 | 370 | 340 | 350 | 340 | 325 | 705 | 685 |
| | Foamability: Foam breaking properties (%) | 51 | 52 | 50 | 47 | 49 | 49 | 47 | 48 | 71 | 47 | 70 | 68 | 77 | 69 | 70 | 73 | 68 | 80 | 78 |
| | Rate of copolymerization of emulsifier (%) | 71 | 69 | 70 | 76 | 71 | 75 | 70 | 69 | 45 | 59 | 47 | 40 | 38 | 78 | 53 | 55 | 66 | — | — |
| Polymer film | Resistance to water-whitening (number of days) | 10 | 10 | 11 | 14 | 10 | 12 | 9 | 8 | 5 | 3 | 6 | 4 | 4 | 2 | 3 | 2 | 4 | 1 | <1 |
| | Peeling | ◎ | ◎ | ◎ | ◎ | ◎ | ◎ | ◎ | ◎ | ◎ | △ | ◎ | ○ | ○ | × | △ | × | △ | ○ | ○ |
| | Coefficient of water absorption (% by weight) | 8. 7 | 7. 5 | 6. 8 | 5. 5 | 7. 2 | 6. 1 | 9. 4 | 9. 5 | 16. 7 | 12. 3 | 15. 0 | 17. 3 | 18. 1 | 26. 5 | 28. 4 | 27. 2 | 25. 7 | 27. 0 | 28. 1 |

*1) Adjusted by the concentration of active component of emulsifier

*2) Polyoxyethylene styrenated phenyl ether ammonium sulfate (reactive group-free anionic emulsifier for emulsion polymerization), manufactured by Dai-ichi Kogyo Seiyaku Co., Ltd.

[Table 3]

| Formulation/composition (charge unit (g)) | Example 3-1 | 3-2 | 3-3 | 3-4 | 3-5 | 3-6 | 3-7 | 3-8 | 3-9 | Comparative Example 3-1 | 3-2 | 3-3 | 3-4 | 3-5 | 3-6 |
|---|---|---|---|---|---|---|---|---|---|---|---|---|---|---|---|
| Styrene | 20.0 | | | | | | | | | | | | | | |
| Butadiene | 20.0 | | | | | | | | | | | | | | |
| Potassium persulfate | 0.12 | | | | | | | | | | | | | | |
| Sodium naphthalenesulfonate formalin condensate (active component:40 %) | 0.30 | | | | | | | | | | | | | | |
| Sodium carbonate | 0.12 | | | | | | | | | | | | | | |
| Dodecylmercaptan | 0.12 | | | | | | | | | | | | | | |
| Ion-exchanged water | Balance *1 | | | | | | | | | | | | | | |
| p-tert-Butylcatechol | 0.12 | | | | | | | | | | | | | | |
| [Emulsifier] (reactive group in the parenthesis) | | | | | | | | | | | | | | | |
| Reactive Emulsifier [1] (allyl type) | 1.2 | 1.2 | 1.2 | 1.2 | 1.2 | | | | 1.2 | 1.2 | 1.2 | | | | |
| Reactive Emulsifier [5] (allyl type) | | | | | | 1.2 | | | | | | 1.2 | | | |
| Reactive Emulsifier [8] (allyl type) (active component:40%) | | | | | | | 3.0 | | | | | | 3.0 | | |
| Reactive Emulsifier [11] (ally type) | | | | | | | | 1.2 | | | | | | | |
| Dodecyldiphenylether sodium disulfonate (active component:50%) *2 | | | | | | | | | | | | | | 2.4 | 2.4 |
| [Polyfunctional monomer] | | | | | | | | | | | | | | | |
| Trimethylolpropane triacrylate | 0.20 | | | | | | | | | | | | | | |
| Ethylene glycol dimethacrylate | | 0.20 | | | | | | | | | | | | | |
| Triallylcyanurate | | | 0.10 | 0.20 | 0.30 | 0.20 | 0.20 | 0.20 | | | 0.45 | | | | 0.20 |
| 1,6-Hexanediol diacrylate | | | | | | | | | 0.20 | | | | | | |
| Total charge amount | 100.0 | | | | | | | | | | | | | | |
| [Evaluation item] | | | | | | | | | | | | | | | |
| Polymer dispersion: Solid content (% by weight) | 39.7 | 39.7 | 39.3 | 39.8 | 40.2 | 39.3 | 39.4 | 40.1 | 39.3 | 39.3 | 38.6 | 39.0 | 38.6 | 39.9 | 40.2 |
| Polymer dispersion: Evaluation of filter filtration | ◎ | ◎ | ◎ | ◎ | ◎ | ◎ | ◎ | ◎ | ◎ | ◎ | × | ◎ | ◎ | ◎ | △ |
| Polymer dispersion: Rate of copolymerization of emulsifier (%) | 80 | 81 | 74 | 82 | 86 | 68 | 68 | 86 | 69 | 59 | 82 | 52 | 43 | — | — |

*1) Adjusted by the concentration of active component of charged component
*2) Non-reactive emulsifier

[Table 4]

| Formulation/composition (charge unit (g)) | Example 4-1 | 4-2 | 4-3 | 4-4 | 4-5 | 4-6 | 4-7 | 4-8 | Comparative Example 4-1 | 4-2 | 4-3 | 4-4 | 4-5 | 4-6 | 4-7 | 4-8 |
|---|---|---|---|---|---|---|---|---|---|---|---|---|---|---|---|---|
| [Preparation of polybutadiene dispersion] | | | | | | | | | | | | | | | | |
| [Emulsifier (1)] (reactive group in the parenthesis) | | | | | | | | | | | | | | | | |
| Reactive Emulsifier [1] (allyl type) | 3.0 | 3.0 | 3.0 | | | | | | 3.0 | | | | | | | |
| Reactive Emulsifier [3] (allyl type) | | | | 3.0 | | | | | | 3.0 | | | | | | |
| Reactive Emulsifier [10] (propenyl type) | | | | | 3.0 | | | | | | 3.0 | | | | | |
| Reactive Emulsifier [12] (methacrylate type) | | | | | | | | | | | | 3.0 | 3.0 | | | |
| RONDIS K *1 (active component: 25%) | | | | | | 12.0 | 12.0 | 12.0 | | | | | | 12.0 | 12.0 | 12.0 |
| Solid content of polybutadiene dispersion (% by weight) | 40.7 | 40.8 | 40.7 | 40.8 | 41.0 | 41.1 | 41.1 | 41.2 | 40.8 | 40.8 | 40.9 | 40.9 | 40.0 | 41.2 | 41.1 | 42.2 |
| [Preparation of ABS dispersion] | | | | | | | | | | | | | | | | |
| [Emulsifier (2)] (reactive group in the parenthesis) | | | | | | | | | | | | | | | | |
| Reactive Emulsifier [1] (allyl type) | 1.9 | 1.9 | 1.9 | | | 1.9 | | | 1.9 | | | | | | | |
| Reactive Emulsifier [3] (allyl type) | | | | 1.9 | | | | | | 1.9 | | | | | | |
| Reactive Emulsifier [7] (allyl type) | | | | | | | 1.9 | | | | | | | | | |
| Reactive Emulsifier [9] (maleic acid type) | | | | | | | | 1.9 | | | | | | 1.9 | | |
| Reactive Emulsifier [10] (propenyl type) | | | | | 1.9 | | | | | | 1.9 | | | | | |
| Reactive Emulsifier [12] (methacrylate type) | | | | | | | | | | | | 1.9 | 1.9 | | | |
| RONDIS K *1 (active component: 25%) | | | | | | | | | | | | | | | 7.6 | 7.6 |
| [Polyfunctional monomer] | | | | | | | | | | | | | | | | |
| Trimethylolpropane trimethacrylate | 0.3 | | | 0.3 | 0.3 | 0.3 | 0.3 | 0.3 | | | | | 0.3 | | | 0.3 |
| Triallylcyanurate | | 0.3 | | | | | | | | | | | | | | |
| 1,3-Butylene glycol dimethacrylate | | | 0.3 | | | | | | | | | | | | | |
| Z/Y ratio *2 | 0.11 | 0.11 | 0.11 | 0.11 | 0.11 | 0.16 | 0.16 | 0.16 | 0 | 0 | 0 | 0 | 0.11 | 0 | — | — |
| [Evaluation item] | | | | | | | | | | | | | | | | |
| Polymer dispersion: Solid content (% by weight) | 44.3 | 43.8 | 42.3 | 42.8 | 44.0 | 44.7 | 42.5 | 42.8 | 42.0 | 41.8 | 42.8 | 42.7 | 42.1 | 41.9 | 43.0 | 42.1 |
| Polymer dispersion: Polymerization stability (% by weight) | 0.10 | 0.13 | 0.18 | 0.12 | 0.16 | 0.09 | 0.18 | 0.12 | 0.11 | 0.16 | 0.15 | 1.08 | 1.87 | 0.12 | 0.09 | 0.32 |
| Polymer dispersion: Rate of copolymerization of emulsifier (%) *3 | 77.5 | 72.6 | 71.2 | 72.1 | 75.2 | 83.2 | 73.2 | 80.5 | 46.3 | 45.5 | 53.6 | 58.0 | 57.8 | 55.1 | — | — |
| Polymer recovery step: Polymer recovery rate (%) | 98.4 | 98.5 | 98.2 | 99.4 | 98.3 | 98.3 | 98.6 | 99.2 | 87.3 | 89.0 | 88.5 | 93.5 | 94.6 | 89.3 | 96.5 | 97.0 |
| Polymer recovery step: Total organic carbon (TOC) amount (ppm) | 121 | 110 | 128 | 88 | 112 | 310 | 332 | 302 | 450 | 545 | 404 | 383 | 368 | 453 | 8050 | 7680 |

*1) Disproportional rosin soap aqueous solution (reactive group-free anionic emulsifier for emulsion polymerization), manufactured by Arakawa Chemical Industries, Ltd.

*2) Proportion of the use amount of polyfunctional monomer to a total amount of the use amount of Emulsifier (1) and the use amount of Emulsifier (2) calculated on the basis of the solid content of polybutadiene dispersion

*3) Rate of copolymerization of the reactive emulsifier relative to a total amount of the emulsifiers in all of the steps as for Examples 4-1 to 4-5 and Comparative Examples 4-1 to 4-5, and rate of copolymerization of the reactive emulsifier in the ABS dispersion preparation step as for Examples 4-6 to 4-8 and Comparative Example 4-6

From the results shown in Tables 1 to 4, it is understood that according to the present invention, regardless of the reactive emulsifier species and the monomer species, the rate of copolymerization of the reactive emulsifier with a monomer is enhanced, the bubble trouble in a production process is dissolved, the polymer dispersion having high stability is obtained, and it is possible to greatly reduce the effluent load. In addition, it is understood that in the polymer film obtained therefrom, the problems of a whitening phenomenon and a water absorption/swelling phenomenon to be caused due to the contact with water are solved.

3. Preparation of polymer dispersion using hydrophilic monomer and evaluation of obtained polymer dispersion and polymer film:

[Experiment 5: Preparation of methyl methacrylate/butyl acrylate-based polymer dispersion] (Examples 5-1 to 5-8 and Comparative Examples 5-1 to 5-8)

123.75 g of methyl methacrylate, 123.75 g of butyl acrylate, and 2.5 g of acrylic acid were blended as monomers, and subsequently, the blend was mixed with prescribed amounts of an emulsifier and a polyfunctional monomer as described in Table 5 and further 105 g of ion-exchanged water by using a homomixer, thereby preparing a mixed monomer emulsion.

Subsequently, in a reactor equipped with a stirrer, a reflux condenser, a thermometer, a nitrogen inlet tube, and a dropping funnel, 122 g of ion-exchanged water and 0.25 g of sodium hydrogen carbonate were charged, and stirring was continued while ventilating nitrogen, into which was then charged 36 g of a part of the above-described previously prepared mixed monomer emulsion, followed by increasing the temperature to 80°C. Thereafter, after continuing the stirring for 15 minutes, a solution of 0.5 g of ammonium persulfate as a polymerization initiator in 20 g of ion-exchanged water was added to commence polymerization. Subsequently, 15 minutes after adding the polymerization initiator, 324 parts of a residue of the mixed monomer emulsion was dropped over 3 hours, thereby achieving polymerization. Furthermore, ripening was subsequently carried out for 2 hours, and the resultant was cooled and adjusted at a pH of 8 with ammonia water. There were thus obtained polymer dispersions to be provided for the evaluation experiments of the present invention.

[Experiment 6: Preparation of styrene/butyl acrylate-based polymer dispersion] (Examples 6-1 to 6-7 and Comparative Examples 6-1 to 6-9)

Polymer dispersions to be provided for the evaluation experiments of the present invention were obtained by carrying out the emulsion polymerization in the same operations as those in Example 5, except for changing the monomer components in the above-described Experiment 5 from methyl methacrylate and butyl acrylate to styrene and butyl acrylate, respectively and changing the reactive emulsifier and the polyfunctional monomer to those as described in Table 6.

[Experiment 7: Preparation of styrene/butadiene dispersion] (Examples 7-1 to 7-10 and Comparative Example 7-1 to 7-6)

60 g of ion-exchanged water was charged in, a pressure glass bottle as a reactor, specifically an empty bottle for carbonated drink, dissolved oxygen was removed with a nitrogen gas, and the glass bottle was then cooled in an ice water bath. Thereafter, the emulsifier and the polyfunctional monomer as described in Table 7 were added, 0.12 g of a naphthalenesulfonic acid formalin condensate, 0.12 g of sodium carbonate, and 0.12 g of dodecyl mercaptan were further added, and the glass bottle was temporarily plugged with a rubber stopper. The contents of the glass bottle were lightly shaken by hand and made uniform, and the bottle was then opened. 20 g of styrene and 0.12 g of potassium persulfate were charged, and the glass bottle was again temporarily plugged with a rubber stopper and then allowed to stand under cooling in an ice water bath. Subsequently, butadiene was introduced from a butadiene cylinder into a graduated sample collecting tube in a methanol dry ice bath and liquefied, and 20 g of weighed butadiene was charged in the glass bottle using a syringe equipped with a stop-cock. Immediately thereafter, the glass bottle was covered by a prescribed metal-made cap and capped, thereby preparing a bottle polymerization reactor. Subsequently, the capped glass bottle was strongly shaken to render the content liquid in the glass bottle in an emulsified state. Subsequently, the glass bottle was set in a holder within a rotary polymerization tank for bottle polymerization adjusted at a water temperature of 50°C, and the emulsion was polymerized at a number of revolutions of 50 rpm for 20 hours, thereby achieving emulsion polymerization by the bottle polymerization method. Thereafter, the glass bottle was put into an ice water bath and cooled, followed by opening. 0.12 g of p-tert-butyl catechol was added, and the unreacted butadiene was volatilized and distilled off by means of bubbling with a nitrogen gas within a draft, thereby obtaining a polymer dispersion.

With respect to the polymer dispersions and the polymer films obtained in the respective Examples and Comparative Examples of Experiments 5 to 7 as described above, the evaluation tests were carried out in the same manners

as those in the above-described Experiments 1 to 4. Results of them are shown in Tables 5 to 7.

[Table 5]

| Formulation/composition (charge unit (g)) | | Example 5-1 | Example 5-2 | Example 5-3 | Example 5-4 | Example 5-5 | Example 5-6 | Example 5-7 | Example 5-8 | Comparative Example 5-1 | Comparative Example 5-2 | Comparative Example 5-3 | Comparative Example 5-4 | Comparative Example 5-5 | Comparative Example 5-6 | Comparative Example 5-7 | Comparative Example 5-8 |
|---|---|---|---|---|---|---|---|---|---|---|---|---|---|---|---|---|---|
| Methylmethacrylate | | 123.75 | | | | | | | | | | | | | | | |
| Butylacrylate | | 123.75 | | | | | | | | | | | | | | | |
| Acrylic acid | | 2.5 | | | | | | | | | | | | | | | |
| Ammonium persulfate | | 0.5 | | | | | | | | | | | | | | | |
| Sodium hydrogen carbonate | | 0.25 | | | | | | | | | | | | | | | |
| Ion-exchanged water | | Balance *1 | | | | | | | | | | | | | | | |
| [Emulsifier] (reactive group in the parenthesis) | | | | | | | | | | | | | | | | | |
| Reactive Emulsifier [1] (allyl type) | | 5.0 | 5.0 | 5.0 | 5.0 | | | | 1.5 | 5.0 | | 5.0 | | | | | |
| Reactive Emulsifier [2] (allyl type) | | | | | | | | | 3.5 | | | | | | | | |
| Reactive Emulsifier [4] (allyl type) | | | | | | 5.0 | | | | | 5.0 | | | | | | |
| Reactive Emulsifier [8] (allyl type) (active component: 40%) | | | | | | | 12.5 | | | | | | | | | | |
| Reactive Emulsifier [10] (propenyl type) | | | | | | | | 5.0 | | | | | | | | | |
| Reactive Emulsifier [12] (methacrylate type) | | | | | | | | | | | | | 5.0 | 5.0 | | | |
| Reactive Emulsifier [13] (vinyl type) | | | | | | | | | | | | | | | 5.0 | 5.0 | |
| HITENOL LA-12 *2 | | | | | | | | | | | | | | | | | 5.0 |
| [Hydrophilic monomer] | | | | | | | | | | | | | | | | | |
| 2-Hydroxyethylacrylate | | 0.5 | | | | 0.5 | 0.5 | 0.5 | | | | | 0.5 | | 0.5 | | |
| 2-Hydroxyethylmethacrylate | | | 0.5 | | | | | | | | | 6.0 | | | | | |
| 2-Hydroxypropylmethacrylate | | | | 0.5 | | | | | | | | | | | | | |
| 2-Hydroxyethylallylether | | | | | 0.5 | | | | 0.5 | | | | | | | | |
| Total charge amount | | 500.0 | | | | | | | | | | | | | | | |
| [Evaluation item] | | | | | | | | | | | | | | | | | |
| Polymer dispersion | Solid content (% by weight) | 51.2 | 51.2 | 51.1 | 51.0 | 51.0 | 50.5 | 51.2 | 51.1 | 51.0 | 51.1 | 50.1 | 51.1 | 51.0 | 51.0 | 51.2 | 51.1 |
| | Polymerization stability (% by weight) | 0.02 | 0.07 | 0.10 | 0.13 | 0.16 | 0.15 | 0.10 | 0.05 | 0.07 | 0.08 | 1.24 | 1.10 | 0.75 | 1.30 | 0.88 | 0.08 |
| | Average particle diameter (μm) | 0.18 | 0.17 | 0.17 | 0.18 | 0.18 | 0.18 | 0.17 | 0.19 | 0.18 | 0.18 | 0.22 | 0.23 | 0.21 | 0.21 | 0.25 | 0.17 |
| | Foam ability: Immediate foam height (mL) | 290 | 295 | 280 | 280 | 285 | 285 | 285 | 290 | 350 | 340 | 340 | 350 | 365 | 300 | 320 | 705 |
| | Foam ability: Foam breaking properties (%) | 54 | 55 | 55 | 53 | 50 | 48 | 47 | 51 | 74 | 72 | 68 | 72 | 59 | 65 | 48 | 88 |
| | Mechanical stability (% by weight) | <0.01 | <0.01 | <0.01 | 0.03 | 0.06 | 0.09 | 0.02 | 0.01 | <0.01 | <0.01 | 3.45 | 1.22 | 0.45 | 1.20 | 0.66 | 0.02 |
| Polymer film | Resistance to water-whitening (number of days) | >30 | >30 | >30 | >30 | >30 | >30 | >30 | >30 | >30 | >30 | 5 | 12 | 14 | 7 | 8 | 4 |
| | Peeling | ◎ | ◎ | ◎ | ◎ | ◎ | ◎ | ◎ | ◎ | ◎ | ◎ | × | × | △ | × | △ | ○ |
| | Coefficient of water absorption (% by weight) | 10.5 | 10.0 | 10.2 | 8.0 | 11.8 | 12.5 | 12.1 | 9.8 | 18.0 | 17.5 | 16.4 | 25.6 | 27.5 | 30.2 | 25.8 | 29.5 |

*1) Adjusted by the concentration of active component of emulsifier

*2) Polyoxyethylene laurylether ammonium sulfate (reactive group-free anionic general-purpose emulsifier for emulsion polymerization), manufactured by Dai-ichi Kogyo Seiyaku Co., Ltd.

[Table 6]

| Formulation/composition (charge unit (g)) | | Example | | | | | | | Comparative Example | | | | | | | | |
|---|---|---|---|---|---|---|---|---|---|---|---|---|---|---|---|---|---|
| | | 6−1 | 6−2 | 6−3 | 6−4 | 6−5 | 6−6 | 6−7 | 6−1 | 6−2 | 6−3 | 6−4 | 6−5 | 6−6 | 6−7 | 6−8 | 6−9 |
| Styrene | | 123.75 | | | | | | | | | | | | | | | |
| Butylacrylate | | 123.75 | | | | | | | | | | | | | | | |
| Acrylic acid | | 2.5 | | | | | | | | | | | | | | | |
| Ammonium persulfate | | 0.5 | | | | | | | | | | | | | | | |
| Sodium hydrogen carbonate | | 0.25 | | | | | | | | | | | | | | | |
| Ion-exchanged water | | Balance *1 | | | | | | | | | | | | | | | |
| [Emulsifier] (reactive group in the parenthesis) | | | | | | | | | | | | | | | | | |
| Reactive Emulsifier [1] (allyl type) | | 5.0 | | | | | | | 5.0 | | | 5.0 | 5.0 | | | | |
| Reactive Emulsifier [5] (allyl type) | | | 5.0 | | | | | | | 5.0 | | | | | | | |
| Reactive Emulsifier [6] (allyl type) | | | | 5.0 | | | | | | | | | | | | | |
| Reactive Emulsifier [8] (allyl type) (active component:40%) | | | | | 12.5 | | | | | | | | | | | | |
| Reactive Emulsifier [10] (propenyl type) | | | | | | 5.0 | 5.0 | 5.0 | | | 5.0 | | | | | | |
| Reactive Emulsifier [12] (methacrylate type) | | | | | | | | | | | | | | 5.0 | | | |
| Reactive Emulsifier [13] (vinyl type) | | | | | | | | | | | | | | | 5.0 | | |
| HITENOL NF-13 *2 | | | | | | | | | | | | | | | | 5.0 | 5.0 |
| [Hydrophilic monomer] | | | | | | | | | | | | | | | | | |
| 2-Hydroxyethyl acrylate | | | | | | 0.5 | | | | | | | | 0.5 | 0.5 | 0.5 | |
| 2-Hydroxyethyl methacrylate | | 0.5 | 0.5 | 0.5 | 0.5 | | 0.5 | | | | | | | | | | |
| Methoxytriethylene glycol acrylate | | | | | | | | 0.5 | | | | 6.0 | | | | | |
| Methoxypolyoxyethylene (5) acrylate | | | | | | | | | | | | | 0.5 | | | | |
| Total charge amount | | 500.0 | | | | | | | | | | | | | | | |
| [Evaluation item] | | | | | | | | | | | | | | | | | |
| Polymer dispersion | Solid content (% by weight) | 50.7 | 51.1 | 50.8 | 50.7 | 50.9 | 50.6 | 51.0 | 50.1 | 50.2 | 50.5 | 50.3 | 50.2 | 49.5 | 49.8 | 51.0 | 51.0 |
| | Polymerization stability (% by weight) | 0.10 | 0.12 | 0.18 | 0.20 | 0.10 | 0.08 | 0.11 | 0.10 | 0.13 | 0.11 | 1.45 | 0.22 | 1.25 | 3.60 | 0.15 | 0.14 |
| | Average particle diameter (μm) | 0.15 | 0.16 | 0.19 | 0.15 | 0.16 | 0.15 | 0.15 | 0.15 | 0.15 | 0.15 | 0.15 | 0.20 | 0.18 | 0.16 | 0.16 | 0.16 |
| | Foam ability: Immediate foam height (mL) | 290 | 280 | 270 | 295 | 280 | 285 | 280 | 345 | 340 | 340 | 420 | 405 | 355 | 330 | 695 | 685 |
| | Foam ability: Foam breaking properties (%) | 50 | 51 | 45 | 42 | 40 | 41 | 42 | 71 | 70 | 70 | 76 | 78 | 68 | 69 | 81 | 78 |
| | Rate of copolymerization of emulsifier (%) | 67 | 66 | 72 | 74 | 90 | 88 | 91 | 45 | 47 | 75 | 52 | 43 | 43 | 75 | — | — |
| Polymer film | Resistance to water-whitening (number of days) | 15 | 14 | 15 | 12 | 12 | 10 | 11 | 5 | 6 | 5 | 3 | 3 | 5 | 3 | <1 | <1 |
| | Peeling | ◎ | ◎ | ◎ | ◎ | ◎ | ◎ | ◎ | ◎ | ◎ | ◎ | ○ | ○ | ○ | × | ○ | ○ |
| | Coefficient of water absorption (% by weight) | 10.2 | 9.5 | 8.5 | 9.2 | 6.5 | 6.2 | 6.6 | 16.7 | 15.0 | 9.5 | 29.5 | 19.0 | 20.6 | 30.2 | 31.5 | 28.1 |

*1) Adjusted by the concentration of active component of emulsifier

*2) Polyoxyethylene styrenated phenyl ether ammonium sulfate (reactive group-free anionic emulsifier for emulsion polymerization), manufactured by Dai-ichi Kogyo Seiyaku Co., Ltd.

[Table 7]

| Formulation/composition (charge unit (g)) | Example | | | | | | | | | | Comparative Example | | | | | |
|---|---|---|---|---|---|---|---|---|---|---|---|---|---|---|---|---|
| | 7-1 | 7-2 | 7-3 | 7-4 | 7-5 | 7-6 | 7-7 | 7-8 | 7-9 | 7-10 | 7-1 | 7-2 | 7-3 | 7-4 | 7-5 | 7-6 |
| Styrene | 20.0 | | | | | | | | | | | | | | | |
| Butadiene | 20.0 | | | | | | | | | | | | | | | |
| Potassium persulfate | 0.12 | | | | | | | | | | | | | | | |
| Sodium naphthalenesulfonate formalin condensate (active component: 40%) | 0.30 | | | | | | | | | | | | | | | |
| Sodium carbonate | 0.12 | | | | | | | | | | | | | | | |
| Dodecylmercaptan | 0.12 | | | | | | | | | | | | | | | |
| Ion-exchanged water | Balance *1 | | | | | | | | | | | | | | | |
| p-tert-Butylcatechol | 0.12 | | | | | | | | | | | | | | | |
| [Emulsifier] (reactive group in the parenthesis) | | | | | | | | | | | | | | | | |
| Reactive Emulsifier [1] (allyl type) | 1.2 | 1.2 | 1.2 | | | | | | | 1.2 | 1.2 | | | 1.2 | | |
| Reactive Emulsifier [3] (allyl type) | | | | 1.2 | | | | | | | | | | | | |
| Reactive Emulsifier [5] (allyl type) | | | | | 1.2 | | | | | | | 1.2 | | | | |
| Reactive Emulsifier [7] (allyl type) | | | | | | 1.2 | | | | | | | | | | |
| Reactive Emulsifier [9] (allyl type) | | | | | | | 1.2 | | | | | | | | | |
| Reactive Emulsifier [10] (propenyl type) | | | | | | | | 1.2 | | | | | 1.2 | | | |
| Reactive Emulsifier [11] (ally type) | | | | | | | | | 1.2 | | | | | | | |
| Dodecyldiphenylether sodium disulfonate (active component: 50%) *2 | | | | | | | | | | | | | | | 2.4 | 2.4 |
| [Hydrophilic monomer] | | | | | | | | | | | | | | | | |
| 2-Hydroxyethylacrylate | 0.20 | | | 0.20 | 0.20 | 0.20 | 0.20 | 0.20 | 0.20 | 0.05 | | | | 1.5 | | |
| 2-Hydroxyethylmethacrylate | | 0.20 | | | | | | | | | | | | | | |
| 2-Hydroxyethylallylether | | | 0.20 | | | | | | | | | | | | | 0.20 |
| Total charge amount | 100.0 | | | | | | | | | | | | | | | |
| [Evaluation item] | | | | | | | | | | | | | | | | |
| Polymer dispersion: Solid content (% by weight) | 39.5 | 39.6 | 39.3 | 39.4 | 39.5 | 39.2 | 39.4 | 39.3 | 40.0 | 39.5 | 39.3 | 39.6 | 38.5 | 38.3 | 39.9 | 39.8 |
| Polymer dispersion: Foamability: Immediate foam height (mL) | 240 | 245 | 240 | 250 | 245 | 255 | 240 | 180 | 245 | 250 | 290 | 300 | 240 | 310 | 450 | 445 |
| Polymer dispersion: Evaluation of filter filtration | ◎ | ◎ | ◎ | ◎ | ◎ | ◎ | ◎ | ◎ | ◎ | ◎ | ◎ | ◎ | ◎ | △ | ◎ | ○ |
| Polymer dispersion: Rate of copolymerization of emulsifier (%) | 70 | 68 | 69 | 82 | 70 | 80 | 77 | 94 | 88 | 76 | 59 | 54 | 75 | 64 | — | — |

*1) Adjusted by the concentration of active component of charged component
*2) Non-reactive emulsifier

From the results shown in Tables 5 to 7, it is understood that according to the present invention, regardless of the reactive emulsifier species and the monomer species, the rate of copolymerization of the reactive emulsifier with a monomer is enhanced, the bubble trouble in a production process is dissolved, and the polymer dispersion having high stability is obtained. In addition, it is understood that in the polymer film obtained therefrom, the problems of a whitening phenomenon and a water absorption/swelling phenomenon to be caused due to the contact with water are solved.

Industrial Applicability

The aqueous polymer dispersion obtained by the present invention has low foamability, and the polymer film obtained therefrom has excellent water resistance, and therefore, they can be suitably utilized as paints, coating materials, and the like, which are used for building structures, housing interiors and exteriors, automobiles, railways, various vehicles, ships, storing containers, electrical machines, electronic instruments, precision instruments, display instruments, metal goods, resin goods, furniture, leather goods, textile groups, and the like. In addition, they can also be suitably used as adhesives and pressure-sensitive adhesives for papers, rubbers, resins, leathers, textiles, woods, metals, glasses, ceramics, and the like.

## Claims

1. An emulsion polymerization method for carrying out emulsion polymerization of monomers using a reactive emulsifier in an aqueous medium in the presence of a polymerization initiator, which is **characterized in:**

    **that** the emulsion polymerization is carried out using
    one or two or more kinds of polymerizable unsaturated monomers X having at least one carbon-carbon double bond in a molecule,
    one or two or more kinds of reactive emulsifiers Y having at least one polymerizable group represented by any one of the following chemical formulae (1) to (3) in a molecule, and
    one or two or more kinds of polyfunctional monomers Z1 having two or more polymerizable unsaturated groups in a molecule and having a molecular weight per functional group of less than 150, or one or two or more kinds of hydrophilic monomers Z2 having one polymerizable unsaturated group in a molecule, having a hydrophilic group selected from a hydroxyethyl group, a 2-hydroxyethoxyethyl group, a hydroxypropyl group, a 2-hydroxypropoxypropyl group, a polyoxyethylene group, a polyoxypropylene group, a glyceryl group, a polyglyceryl group, and an alkoxylated derivative of these groups having from 1 to 4 carbon atoms in a molecule, and having an average molecular weight of less than 250; and
    **that** a proportion of the total use amount of the polyfunctional monomer Z1 or hydrophilic monomer Z2 to the total use amount of the reactive emulsifier Y is in the range of Z1/Y = 1/3 to 1/30 or Z2/Y = 1/1 to 1/30 in terms of a mass ratio:

    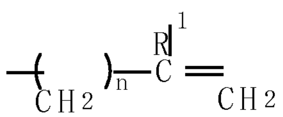 ... (1)

    $-CH=CH-CH_3$ (2)

    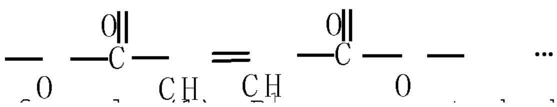 ... (3)

    wherein in the formula (1), $R^1$ represents hydrogen or a methyl group; and n represents an integer of from 1 to 5.

2. The emulsion polymerization method according to claim 1, which is **characterized in that** the polyfunctional monomer Z1 or hydrophilic monomer Z2 has at least one group represented by any one of the following chemical formulae (4) to (6) as the polymerizable unsaturated group in a molecule:

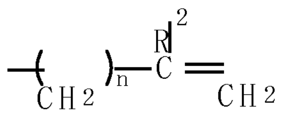 ... (4)

$-CH=CH-CH_3$ (5)

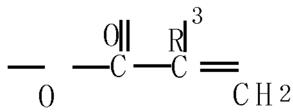 ... (6)

wherein each of $R^2$ in the formula (4) and $R^3$ in the formula (6) represents a hydrogen atom or a methyl group; and n in the formula (4) represents an integer of from 1 to 5.

3. The emulsion polymerization method according to claim 2, which is **characterized in that** the polyfunctional monomer Z1 is one or two or more kinds of members selected from ethylene glycol diacrylate, ethylene glycol dimethacrylate, trimethylolpropane triacrylate, trimethylolpropane trimethacrylate, 1,6-hexanediol diacrylate, 1,3-butylene glycol dimethacrylate, triallyl cyanurate, trimethallyl cyanurate, triallyl isocyanurate, trimethallyl isocyanurate, and octaallyl sucrose.

4. The emulsion polymerization method according to claim 2, which is **characterized in that** the hydrophilic monomer Z2 is one or two or more kinds of members selected from hydroxyethyl acrylate, hydroxyethyl methacrylate, 2-(2-hydroxyethoxy)ethyl acrylate, 2-(2-hydroxyethoxy)ethyl methacrylate, hydroxypropyl acrylate, hydroxypropyl methacrylate, polyoxyethylene acrylate, polyoxyethylene methacrylate, and a methoxylated derivative of these monomers.

5. The emulsion polymerization method according to any one of claims 1 to 4, which is **characterized by** using at least styrene as the polymerizable unsaturated monomer X.

6. A polymer dispersion obtained by the emulsion polymerization method according to any one of claims 1 to 5.

7. A polymer film prepared by drying a polymer dispersion obtained by the emulsion polymerization method according to any one of claims 1 to 5.

**INTERNATIONAL SEARCH REPORT**

International application No.
PCT/JP2012/005946

A. CLASSIFICATION OF SUBJECT MATTER
*C08F2/24*(2006.01)i, *C08F212/08*(2006.01)i

According to International Patent Classification (IPC) or to both national classification and IPC

B. FIELDS SEARCHED

Minimum documentation searched (classification system followed by classification symbols)
C08F2/24-2/30, C08F212/08

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2009-256481 A (The Nippon Synthetic Chemical Industry Co., Ltd.), 05 November 2009 (05.11.2009), claims; examples 1 to 8, 12, 13, 17, 18; comparative examples 1 to 3 (Family: none) | 1-4,6,7 |
| X | JP 3-12228 A (Lion Corp.), 21 January 1991 (21.01.1991), claims; examples 1, 8 (Family: none) | 1-4,6,7 |
| X | JP 4-272903 A (Nippon Paint Co., Ltd.), 29 September 1992 (29.09.1992), claims; example 5; comparative examples 2, 3 & EP 0501666 A1 & US 5380784 A | 1-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 November, 2012 (01.11.12) | 13 November, 2012 (13.11.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2012/005946

C (Continuation). DOCUMENTS CONSIDERED TO BE RELEVANT

| Category* | Citation of document, with indication, where appropriate, of the relevant passages | Relevant to claim No. |
|---|---|---|
| X | JP 6-116528 A (Japan Synthetic Rubber Co., Ltd.), 26 April 1994 (26.04.1994), claims; examples 1 to 3; comparative examples 1, 4, 5, 6, 8 (Family: none) | 1-7 |
| X | JP 49-85183 A (Kaneka Corp.), 15 August 1974 (15.08.1974), claims; example 2 & US 3907870 A & GB 1427789 A & DE 2363057 A1 & DE 2347438 A1 | 1-4,6,7 |
| X | JP 2006-316239 A (Hitachi Chemical Co., Ltd.), 24 November 2006 (24.11.2006), claims; example 2 (Family: none) | 1-4,6,7 |
| X | JP 11-263961 A (Sanyo Chemical Industries, Ltd.), 28 September 1999 (28.09.1999), claims; example 2 (Family: none) | 1-4,6,7 |
| X | JP 3-21685 A (Showa Highpolymer Co., Ltd.), 30 January 1991 (30.01.1991), comparative example 7 (Family: none) | 1-4,6,7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 63183998 A
- JP 8041113 A
- JP 49046291 B
- JP 58203960 A
- JP 62104802 A
- JP 2002301353 A
- JP 2005536621 T
- JP 2002080506 A
- JP 2002097212 A
- JP 63319035 A
- JP 1099638 A
- JP 2002275115 A
- JP 7018009 A
- JP 4050204 A
- JP 4053802 A
- JP 6248005 A
- JP 4055401 A
- JP 2011006684 A
- JP 2011016996 A
- JP 58045236 A